# EUROPÄISCHE PATENTSCHRIFT

(11) **EP 2 758 356 B1**
(45) Veröffentlichungstag und Bekanntmachung des Hinweises auf die Patenterteilung: **09.06.2021**
(21) Anmeldenummer: 12756674.3
(22) Anmeldetag: 23.08.2012
(51) Int. Cl.: C04B 35/634, C04B 35/638, C04B 38/08

(54) **VERFAHREN ZUR HERSTELLUNG LEICHTER, KERAMISCHER WERKSTOFFE**
METHOD FOR PRODUCING LIGHT CERAMIC MATERIALS
PROCÉDÉ DE PRODUCTION DE MATÉRIAUX CÉRAMIQUES LÉGERS

(30) Priorität: 20.09.2011 DE 102011113696
(43) Veröffentlichungstag der Anmeldung: 30.07.2014
(60) Teilanmeldung: 14196058.3
(73) Patentinhaber: Evonik Operations GmbH, 45128 Essen (DE)
(72) Erfinder: VON RYMON LIPINSKI, Tadeusz, 53125 Bonn (DE); KELLER, Bruno, 55263 Wackernheim (DE); BEISSMANN, Frank, 64832 Babenhausen (DE); NEUGEBAUER, Peter, 65552 Limburg (DE); KERNKE, Ruth, 64287 Darmstadt (DE); POPPE, Dirk, 60599 Frankfurt am Main (DE)
(74) Vertreter: Evonik Patent Association
(86) Internationale Anmeldenummer: PCT/EP2012/066437
(87) Internationale Veröffentlichungsnummer: WO 2013/041322

(56) Entgegenhaltungen:
- EP-A1- 2 025 658
- EP-A2- 0 578 408
- KR-A- 20060 088 157
- KIM J Y ET AL: "Effects of CuO content on the wetting behavior and mechanical properties of a Ag-CuO braze for ceramic joining", JOURNAL OF THE AMERICAN CERAMIC SOCIETY AMERICAN CERAMIC SOC USA,, Bd. 88, Nr. 9, 1. September 2005 (2005-09-01), Seiten 2521-2527, XP002549264, DOI: 10.1111/J.1551-2916.2005.00492.X in der Anmeldung erwähnt
- KIM Y-W ET AL: "Processing of Microcellular Mullite", JOURNAL OF THE AMERICAN CERAMIC SOCIETY, BLACKWELL PUBLISHING, MALDEN, MA, US, vol. 88, no. 12, 1 December 2005 (2005-12-01), pages 3311-3315, XP002733683, ISSN: 0002-7820, DOI: 10.1111/J.1551-2916.2005.00597.X [retrieved on 2005-08-08]

## Beschreibung

### Gebiet der Erfindung

Die vorliegende Erfindung betrifft ein neuartiges Verfahren zur Herstellung keramischer Werkstoffe, insbesondere feuerfester Werkstoffe mit reduziertem spezifischem Gewicht. Insbesondere betrifft die Erfindung ein Verfahren zur Herstellung leichter, feuerfester Werkstoffe mit nicht zusammenhängenden Poren, die zur Wärmedämmung bei Hochtemperaturanwendungen eingesetzt werden können.

Dem Verfahren liegt die Erzeugung im Werkstoffgefüge von sphärischen, geschlossenen und isolierten Poren zugrunde. Die Poren mit einem gezielt einstellbaren Porendurchmesser werden durch den Einsatz von Polymerpartikeln, insbesondere von Polymethacrylaten, insbesondere von mittels Suspensionspolymerisation hergestellten Polymeren bzw. Copolymeren als ausbrennbare Porenbildner erzeugt. Die Polymere bzw. Copolymere liegen in Form von kleinen Kugeln mit einem definierten Durchmesser vor. Die Einführung von isolierten sphärischen Poren erlaubt die Herstellung keramischer Werkstoffe mit einem zum Teil deutlich reduzierten spezifischen Gewicht und im Vergleich zum Stand der Technik verbesserter Korrosionsbeständigkeit und besserer mechanischer Festigkeit. Das spezifische, geschlossene Porensystem trägt gleichzeitig zur Verringerung der Wärmeleitfähigkeit der Keramikwerkstoffe bei. Darüber hinaus ergibt sich aus dem neuartigen Verfahren der Vorteil, dass selbst bei der Herstellung von dickwandigen keramischen Erzeugnissen keine Gefahr der Bildung von schädlichen Schwarzkernen besteht.

### Stand der Technik

Poröse, feuerfeste Keramiken sind vielfältig einsetzbare Werkstoffe, die insbesondere eine hohe Hitzebeständigkeit bzw. sogar Feuerfestigkeit bei nur geringem Gewicht aufweisen. Diese Werkstoffe finden in diversen Hochtemperaturanwendungen, z.B. bei der Metallgewinnung oder -verarbeitung, sowie in der Zement-, Kalk-, Gips-, Glas- oder Keramikindustrie Verwendung.

Poren sind ein Bestandteil der meisten keramischen Erzeugnisse. Man unterscheidet offene (durchgehende), halbgeschlossene (einseitig geschlossene) und geschlossene Poren. Zusammen bilden sie die Gesamtporosität eines Werkstoffes. Poren bilden dabei ein offenes bzw. geschlossenes Porensystem. Im ersten Fall besteht die Porosität überwiegend aus offenen bzw. halbgeschlossenen und zusammenhängenden Poren. Diese Art der Porosität ist typisch für die meisten Keramikwerkstoffe. Geschlossene Poren treten in herkömmlichen Keramikwerkstoffen selten auf.

Ein offenes Porensystem hat einen negativen Einfluss auf die Korrosionsbeständigkeit keramischer Werkstoffe. Durch ein derartiges Porensystem erfolgt die Infiltration des Materials mit gasförmigen und flüssigen korrosiven Stoffen. Auch erfolgt die Diffusion fester Stoffe in das Material hinein durch das Porensystem sehr schnell. Geschlossene und isolierte Poren hingegen beeinträchtigen den Korrosionswiderstand nicht bzw. nicht signifikant.

Ein offenes Porensystem ist ein Schwachpunkt der dichten FF-Werkstoffe mit einer Porosität kleiner 45 %, die als Korrosionsschutz zur Anwendung kommen. Aus diesem Grund ist die maximale Reduzierung der Porosität ein wichtiger Aspekt bei der Herstellung feuerfester Erzeugnisse.
Zwar wirkt sich eine geringe Porosität positiv auf die Korrosionsbeständigkeit aus. Sie bringt allerdings einige Nachteile wie ein hohes Produktgewicht, eine hohe Wärmeleitfähigkeit und niedrigere Temperaturwechselbeständigkeit mit sich.

Nach Stand der Technik gibt es verschiedene Methoden, poröse Keramiken herzustellen. Mit dem Zusatz poröser Zuschlagsstoffe wie Kieselgur, Perlit oder keramischen Hohlkugeln lässt sich nur ein relativ geringer Porenanteil in der Keramik erreichen und die Werkstoffe sind relativ schwer. Mit diesen Zuschlagsstoffen lassen sich zwar Hohlräume in Keramiken erzeugen, diese sind jedoch nicht geschlossen und zusammenhängend. Dies beeinträchtigt die Einsatzeigenschaften solcher Keramiken und schränkt ihre mögliche Anwendung auf wenige Gebiete ein.

Das Aufschäumen einer Keramikrohmasse bzw. eines Keramikschlickes dagegen führt zu einer ungleichmäßigen Porenbildung und zu schwankenden Produktqualitäten. Zudem ist ein hoher, gleichmäßig verteilter Porenanteil kaum zu realisieren. Ähnliches gilt für den Zusatz von Treibmitteln wie z.B. Ammoniumcarbonat oder sublimierenden Substanzen wie Naphthalen.
Die Qualität der Feuerfestkeramiken kann durch Kombination verschiedener Methoden zwar gesteigert werden, ein Optimum einer mechanisch sehr belastbaren und gleichzeitig sehr leichten, korrosionsbeständigen und sehr hitzebeständigen Keramik mit z.B. besonders guten Dämmeigenschaften ist mit diesen Methoden jedoch nur schwer herzustellen. So ist keines dieser herkömmlichen Verfahren zur Herstellung gleichmäßig verteilter, sphärischer, isolierter Poren geeignet.

Die Erzeugung von porösen Feuerfestwerkstoffen mit Hilfe ausbrennbarer Zusatzstoffe gehört gleichfalls zum Stand der Technik. Als Zusatzstoffe finden beispielsweise Kohle, Koks, Sägemehl, Nussschalen, Korkmehl, Schaumpolystyrol, Reisschalen, Torf oder Lignin breite Anwendung. Die Verbrennungsreste einiger dieser Stoffe, wie z.B. Asche oder Schlacke, sind sehr reaktiv und können die Einsatzeigenschaften der FF-Keramiken, z.B. in Bezug auf die Feuerfestigkeit, beeinträchtigen.
Zur Reduktion der Wärmeleitfähigkeit sind diese Keramiken porös, in der Regel eine offene Porenstruktur aufweisend. Die offenen und zusammenhängenden Poren begünstigen jedoch gleichzeitig die Korrosion und damit die Abnutzung des Materials. Zusätzlich führen die ungleichmäßig geformten und zusammenhängenden Poren zu einer Beeinträchtigung der mechanischen Eigenschaften der Feuerfestwerkstoffe. Die meisten der verwendeten ausbrennbaren Porenbildner können bei eingeschränkter Luftzufuhr nicht vollständig oxidieren. Dies wiederum führt zu schwarzen Resten des Porenbildners in der ausgebrannten Keramik, zu so genannten Schwarzkernen, welche die Werkstoffeigenschaften signifikant beeinträchtigen.
Solche leichten Keramiken nach Stand der Technik, insbesondere für Feuerfestanwendungen, zeigen in der Regel eine Kaltdruckfestigkeit zwischen 0,5 und 10 mPa bei einer Porosität zwischen 40% und 80%.

In DE 19700727 werden poröse Steine und andere Tonprodukte sowie ein Verfahren zur Herstellung von derartigen Produkten beschrieben. Die Poren mit einem Durchmesser von 1-10 mm werden durch Zusatz von ausbrennbaren Stoffen erzeugt. Als solche kommen u.a. Abfallstoffe zum Einsatz. Die Poren sind offen und zusammenhängend.

EP 14 33 766 beschreibt ein Gleitbauteil für Abdichtungselemente und seine Herstellung aus Kohlenstoffpartikeln und Phenolharzen. Der Werkstoff enthält sphärische isoliert und homogen verteilte Poren. Bei diesen Partikeln ist eine vollständige Verbrennung jeweils nur schwierig zu erfüllen. Hinzu kommt, dass zwar die Partikel, und damit die resultierenden Poren durchaus homogen verteilt sind, jedoch weder eine homogene Größen- noch eine homogene Formverteilung aufweisen. Diese Aspekte wirken sich jedoch negativ auf die mechanischen Eigenschaften des Werkstoffes aus. Der Werkstoff ist auch nicht für den Einsatz bei hohen Temperaturen geeignet.

In EP 0 578 408 ist ein Verfahren zur Herstellung von keramischen Dichtungselementen aus Siliciumcarbid offenbart. Der Werkstoff enthält sphärische isolierte Poren, die durch den Zusatz von ausbrennbaren Stoffen, wie z.B. Acrylat-, Epoxy-, Polyimid- oder Vinylharzen, Polypropylen, Polyvinylchlorid oder Celluloseacetat erzeugt werden. Diese Kunststoffe werden jedoch, wie sich bereits aus der Verwendung von Harzen zwangsläufig ergibt, entweder in flüssiger Form - oder wenn ausgehärtet als ungleichmäßiges Malgut eingesetzt. Regelmäßige Poren definierter Größe sind auf diese Weise nicht realisierbar. Auch dieser Werkstoff eignet sich für den Einsatz bei hohen Temperaturen nicht.

Aus EP 18 89 821 ist ein Verfahren zur Herstellung von keramischen Gleitbauteilen und Versiegelungselementen bekannt. Die Keramik enthält sphärische Poren größer 5 µm und wird aus einer Mischung von Pulvergranulat mit sphärischen Harzperlen als Porenbildner erzeugt. Als Harz werden Silikonharz, Polystyrol und/oder Acrylatstyrol-copolymer verwendet. Die gebildeten Poren sind weder homogen verteilt noch isoliert. Darüber hinaus verbrennt Polystyrol erst bei sehr hohen Temperaturen und unter Sauerstoff rückstandsfrei. Die keramischen Gleitbauteile weisen einen spezifischen Gefügeaufbau auf, und kommen bei Raum- bzw. bei mäßigen Temperaturen zur Anwendung.

In JP 092 99 472 hat eine poröse biokompatible Implantat-Komponente zum Gegenstand. Die Komponente besteht aus zwei Schichten. Die Oberflächenschicht enthält sphärische Poren, die durch Einsatz eines sphärischen Acrylat-Granulats erzeugt werden. Die Poren sind miteinander verbunden und nicht isoliert. Der Werkstoff ist nicht für den Einsatz bei hohen Temperaturen geeignet.

JP 030 01 090 beschreibt ein Brennhilfsmittel aus hoch reinem Aluminiumoxid und ein Verfahren zur Herstellung eines solchen Bauteils. Das Material enthält sphärische Poren mit einem Durchmesser kleiner 600µm. Es wird aus einer Mischung aus thermoplastischen Harzperlen und Aluminiumoxid-Pulver (Al₂O₃) hergestellt. Die Harzperlen bestehen z.B. aus Styrol-methylmethacrylat-copolymeren. Die Poren sind offen und nicht isoliert.

In KR 2006 088 157 ist die Herstellung von hochporösen Keramikwerkstoffen mit hoher Festigkeit offenbart. Als Porenbildner kommen sphärische Partikel aus Polymethacrylaten oder vernetzbaren, Ethylenglycoldimethacrylat enthaltenden Polymethacrylaten zum Einsatz. Die Poren im Werkstoff sind homogen verteilt aber nicht isoliert.

Bei Kim et al. (Journal of the American Ceramic Society (2005), 88(12), 3311-3315) wird ein Verfahren zur Herstellung von microcellularem Mullit beschrieben. Die Poren werden durch Zusatz von 20 µm großen, vernetzten Polymerperlen erzeugt. Trotz einer hohen Porosität von 40 bis 70 % wiesen die Keramikwerkstoffe eine relativ hohe Festigkeit von 90 bis 10 MPa auf. Die hohe Festigkeit wurde mit der Anwesenheit von homogen verteilten sphärischen Poren mit einer Größe kleiner 20 µm erklärt. Explizit isoliert sind die Poren jedoch nicht, so dass auch gegenüber diesen Werkstoffen eine Verbesserung erzielbar ist. Ferner haben vernetzte Polymerperlen den Nachteil, dass sie zumeist nur schwer unvollständig entfernbar sind. Darüber hinaus werden bei Kim et al. ausschließlich gepresste Leichtwerkstoffe beschrieben. Feuerfestwerkstoffe werden nicht ausgeführt. An diese bzw. an feuerfeste Leichtwerkstoffe sind jedoch ganz andere Anforderungen bezüglich Festigkeit und Haltbarkeit zu stellen.

### Aufgabe

Aufgabe der vorliegenden Erfindung war es, ein neuartiges Verfahren zur Verfügung zu stellen, unter dessen Einsatz keramische Werkstoffe mit einer gegenüber dem Stand der Technik verbesserten Kombination aus spezifischem Gewicht und Dämmungseigenschaften hergestellt werden können.

Weiterhin war es Aufgabe der vorliegenden Erfindung, ein Verfahren zur Verfügung zu stellen, mit dem sowohl geformte als auch ungeformte keramische Werkstoffe mit verbesserten Eigenschaften hergestellt werden können.

Darüber hinaus bestand die Aufgabe, ein Verfahren zur Herstellung von dichten Feuerfest-Werkstoffen (FF-Werkstoffen) mit Reduzierung des Werkstoffgewichtes, ohne die Einsatzeigenschaften, wie Korrosionsbeständigkeit und mechanische Festigkeit, zu beeinträchtigen, zur Verfügung zu stellen.

Parallel bestand die Aufgabe, ein Verfahren zur Herstellung von leichten wärmedämmenden Werkstoffen, also sehr leichten Werkstoffen mit günstigem Verhältnis aus Festigkeit und Porosität und mit im Vergleich zum Stand verbesserter Korrosionsbeständigkeit, zur Verfügung zu stellen.

Insbesondere war es Aufgabe, Werkstoffe zur Verfügung zu stellen mit einem im Vergleich zum Stand der Technik verbesserten Verhältnis aus Porosität und Festigkeit.

Darüber hinaus bestand die Aufgabe, ein Verfahren zur Herstellung von keramischen Werkstoffen mit gegenüber dem Stand der Technik einer verbesserten Korrosionsbeständigkeit zur Verfügung zu stellen.

Darüber hinaus bestand die Aufgabe, ein Verfahren zur Herstellung keramischer Werkstoffe, die eine bessere Wärmedämmung ermöglichen, zu entwickeln.

Es bestand auch die Aufgabe, dass die nach dem Verfahren hergestellten keramischen Werkstoffe wenige oder keine Schwarzkerne nach dem Ausbrennen aufweisen, und dass der Ausbrennvorgang einfach oder gegenüber dem Stand der Technik sogar einfacher durchzuführen ist.

Weitere nicht explizit genannte Aufgaben ergeben sich aus dem Gesamtzusammenhang der nachfolgenden Beschreibung, Ansprüche und Beispiele.

### Lösung

Gelöst werden die Aufgaben durch zur Verfügung stellen eines neuartigen Verfahrens gemäß Anspruch 1 zur Porenbildung in Keramiken, insbesondere in geformt und ungeformt keramischen Werkstoffen mittels Verwendung neuartiger, ausbrennbarer Zusatzstoffe in der Keramikrohmasse. Bei diesen ausbrennbaren Zusatzstoffen handelt es sich um sphärische Polymerpartikel, bevorzugt um thermoplastische, sphärische Polymerpartikel. Thermoplastisch bedeutet in diesem Zusammenhang nicht vernetzt.

Die erfindungsgemäß verwendeten Polymerpartikel sind zusammengesetzt aus einem Polymer, das eine Ceiling-Temperatur kleiner 250 °C und einen Durchmesser zwischen 5 µm und 3 mm, besonders bevorzugt zwischen 10 µm und 1 mm und ganz besonders bevorzugt zwischen 15 µm und 200 µm aufweist. Dabei bildet der Bereich zwischen 0,1 µm und kleiner 5 µm alternative und technisch gleichfalls attraktive Nanoporen. Zudem liegt die Korngrößenverteilung der Polymerpartikel zwischen 0,5 und 2,0, bevorzugt zwischen 0,7 und 1,5. Diese Keramikrohmasse wird erfindungsgemäß bei einer Temperatur, die mindestens 200 °C oberhalb der Ceiling-Temperatur des Polymers liegt, ausgebrannt.

Unter den angegebenen Korngrößen versteht man die medianen Durchmesser, der erfindungsgemäß mittels Laser Diffraction Particle Size Analysis mit einem Coulter Diffraction Particle Size Analyzer, bevorzugt mit einem Coulter LS 200 bestimmt wird. Der mediane Durchmesser ist der Wert der Korngröße, bei dem die Hälfte der Partikel kleiner und die andere Hälfte der Partikel größer ist.

Ein weiterer Wert zur Partikelgrößencharakterisierung ist der durchschnittliche Durchmesser. Dabei handelt es sich um den Durchschnittwert, der von dem Gerät über die Laserbeugung aller vermessenen Partikel gebildet wird. Auch dieser Wert kann z.B. mittels eines Coulter LS 200 bestimmt werden. Es sei jedoch darauf verwiesen, dass die im Rahmen dieses Textes angegebenen Korngrößen mittels des medianen Durchmessers zu bestimmen sind.

Eine dritte Größe stellt die im Rahmen dieser Erfindung so genannte Korngrößenverteilung dar. Dabei handelt es sich um den Quotienten aus dem durchnittlichen Durchmesser und dem medianen Durchmesser. Auch dieser Wert lässt sich direkt z.B. mittels eines Coulter LS 200 bestimmen. Je nach Form der Verteilungskurve kann dieser Wert kleiner oder größer Eins sein. Bei einem besonders breiten Kurvenverlauf im Bereich kleiner Korngrößen ist der Wert z.B. in der Regel kleiner Eins. Im Falle eines ideal symmetrischen Kurvenverlaufs ist der Wert gleich Eins.

Der Anteil der Polymerpartikel, der zu der Keramikrohmasse gegeben wird, liegt zwischen 40 und 70 Gew%. Die prozentualen Angaben der Anteile der Polymerpartikel beziehen sich im Rahmen dieser Erfindung auf die 100 gew%ige Summe aus Keramikrohmasse und Polymerpartikeln Keramische Werkstoffe, die nach dem erfindungsgemäßen Verfahren hergestellt werden zeigen gegenüber dem Stand der Technik eine Reihe verbesserter Eigenschaften. Insbesondere zeigen die Keramiken einen hohen Anteil sphärischer. überwiegend geschlossener und isolierter Poren. Die Poren erfüllen dabei vielfältige Funktionen. Die Vorteile der erfindungsgemäß hergestellten Keramiken mit geschlossenen, sphäroidischen und isolierten Poren sind dabei unter anderem:
- Verbesserung der wärmedämmenden Eigenschaften und damit verminderter Wärmeverlust nach außen
- Bessere Korrosionsbeständigkeit, da deutlich verringerte Infiltration der korrosiven Stoffe in das Werkstoffgefüge
- Günstiges Verhältnis Festigkeit/Porenvolumen im Fall sphärischer Poren
- Eine Porenfreie, geschlossene Oberfläche, die insbesondere für eine spätere Glasierung geeignet ist
- Reduzierung des Bauteilgewichts
- Reduzierter Rohstoffverbrauch, wie z.B. Keramikrohmasse oder Anmachwasser
- Reduzierter Energieverbrauch bei Herstellung und Transport
- Verminderter Energieverbrauch bei Verwendung, zum Beispiel in Öfen, in denen die Dämmschicht mit aufgeheizt werden muss, oder in Tunnelofenwagen, die bewegt werden müssen.
- Die Möglichkeit einer verkleinerten Anlagenauslegung
- Verbesserung der Frostbeständigkeit von keramischen Baustoffen
- Unter Umständen Erhöhung der Zähigkeit des Materials und ein günstigeres Bruchverhalten
- Aufnahme funktioneller Stoffe, wie z.B. Schmierstoffe in keramischen Dichtungen, Verschlusskomponenten etc.
- Unterstützung des Metallabtrags und des Schleifvorgangs bei Verwendung als Schleifmittel
- Deutlich reduzierter bis zu keinem Anteil an Schwarzkernen und damit bessere Einsatzeigenschaften oder optische Eigenschaften

Das Verfahren eignet sich zur Herstellung von sowohl geformten als auch ungeformten Erzeugnissen. Mittels des Verfahrens können neuartige leichte Produkte und Vorprodukte hergestellt werden.

Die Poren in den Keramikwerkstoffen, hergestellt gemäß Stand der Technik, sind meistens miteinander verbunden und bilden ein offenes Porensystem. Teilweise besteht das Porensystem aus halb geschlossenen Poren. Geschlossene isolierte Poren kommen in typischen Keramiken selten vor. Eine besondere Leistung der vorliegenden Erfindung ist es, ein Verfahren zur Verfügung zu stellen, mit dem es erstmalig möglich ist, überwiegend isolierte, geschlossene Poren in einer Keramik zu realisieren. Diese geschlossenen Poren können sich auf eine Reihe von wesentlichen Eigenschaften der keramischen Werkstoffe positiv auswirken. Diese sind z.B.:
- Besserer Infiltrationswiderstand gegenüber Gasen und Flüssigkeiten. Und beispielsweise daraus resultierend eine verbesserte Korrosionsbeständigkeit des Werkstoffs.
- Isolierte, geschlossene Poren führen zu einer besseren isolierenden Wirkung des keramischen Werkstoffes.
- Höhere Festigkeit. Größere und/oder ungleichmäßig geformte Poren führen zu einer bruchbeeinflussenden Spannungsüberhöhung, isolierte, sphärische Poren tragen dagegen zur Steigerung der Festigkeit bei.
- Temperaturwechselbeständigkeit
- Thermisches und elektrisches Verhalten
- Keine oberflächlich sichtbaren Poren und damit ein positives optisches Erscheinungsbild der Keramik

Die Verbesserung der einzelnen bzw. mehrerer dieser Eigenschaften kann gezielt durch die Zusammensetzung der Keramik, den Volumenanteil der Poren und durch die Größe der Poren eingestellt werden. Auch kann die Zusammensetzung der Polymerpartikel im erfindungsgemäßen Verfahren mit Hinblick auf die Ausbrennbedingungen und die benötigte Porengrößen eingestellt werden. Damit ermöglicht das erfindungsgemäße Verfahren eine große Bandbreite der Kombination verschiedener Eigenschaftsfreiheitsgrade.

Insbesondere werden die Aufgaben durch die Wahl besonders geeigneter Polymerpartikel gelöst. Dabei sind drei Eigenschaften der erfindungsgemäß verwendeten Polymerpartikel besonders wichtig: a.) die Zusammensetzung und das daraus resultierende thermische Verhalten des Polymers, b) die Korn- bzw. gleichbedeutend Partikelgröße und die Korngrößenverteilung und c) die Form der Partikel. Darüber hinaus kommt der Zusammensetzung des keramischen Werkstoffs (d) eine große Bedeutung zu.

### a) Die Zusammensetzung des Polymerpartikels

Ein wichtiger Aspekt der Erfindung, insbesondere in Hinblick auf die Vermeidung von Schwarzkernen, ist die rückstandsfreie Entfernung der Porenbildner während des Brennens bzw. im Falle der ungeformten Erzeugnisse, des ersten Aufheizens der Keramik. Dies sorgt dafür, dass sich im Brenngut, selbst bei dickwandigen Gegenständen, kein Schwarzkern bilden kann. Ein Schwarzkern beeinträchtigt die Werkstoffeigenschaften und qualifiziert ein Erzeugnis als Produktionsausschuss.

Der Einsatz von rückstandsfrei verbrennenden Polymerpartikeln ermöglicht die Herstellung von großformatigen porösen Keramikprodukten mit Hilfe der Methode der ausbrennbaren Zusatzstoffe, auch AB-Verfahren genannt, ohne Schwarzkerngefahr. Die üblichen Zusätze garantieren das nicht.

Das rückstandsfreie Verbrennen kann durch zwei unterschiedliche Polymereigenschaften bewirkt werden:
Zum einen weist das erfindungsgemäß im Verfahren verwendete Polymer bevorzugt eine Ceiling-Temperatur kleiner 280 °C, bevorzugt kleiner 240 °C auf. Die Ceiling-Temperatur ist die Temperatur, bei der die Polymerisation der Monomere zu einem Polymer und die Depolymerisation des Polymers zu den Monomeren im Gleichgewicht zueinander stehen. Daraus folgt, dass oberhalb dieser Ceiling-Temperatur, die sich aus der Polymer- bzw. Monomerzusammensetzung ergibt, Polymerketten zu den ursprünglichen Monomeren abgebaut werden, also eine Depolymerisation stattfindet. Bei den meisten Polymeren liegt die Ceiling-Temperatur oberhalb einer Zersetzungstemperatur. In solchen Fällen kommt es oft zu einem Abbau funktioneller Gruppen, zu Eliminierungsreaktionen oder ähnlichem. Es entstehen schwerflüchtige Abbauprodukte bis hin zu einer Verkohlung, aus der wiederum die Schwarzkernbildung resultiert. Bei Polymeren mit einer geringen Ceiling-Temperatur, die unterhalb der Zersetzungstemperaturen liegen sollte, baut die Polymerkette unter höheren Temperaturen, wie im Brennvorgang der Keramik, rückstandsfrei ab und die volatilen Monomere können aus der Keramik entfernt werden. Dabei kann ein großes Ofenvolumen genauso von Vorteil sein, wie das Anlegen eines Unterdrucks.
Vorteil dieses Verfahrens ist es darüber hinaus, dass die freiwerdenden Monomere bei einem Brennvorgang unter Sauerstoff in der Gasphase, z.B. in Luftatmosphäre, verbrannt werden, oder dass das Verfahren auch unter Sauerstoffausschluss sehr gut durchführbar ist. Die Herstellung von porösen Keramikwerkstoffen kann somit auch in einer innerten bzw. reduzierenden Atmosphäre erfolgen. Dies ist bei bekannten Porenbildnern nach Stand der Technik nicht möglich. Daraus ergibt sich die zusätzliche Möglichkeit der Herstellung von Keramikerzeugnissen mit hoher Porosität aus oxidationsanfälligen Werkstoffen, wie Kohlenstoff, Boriden, Carbiden, Nitriden und anderen.
Ein weiterer Vorteil ist, dass die freiwerdenden Monomere rückstandsfrei aus der Keramik entfernt werden können und somit eine Carbidisierung innerhalb der Keramik ausbleibt.

Einsetzbare Polymere mit geringen Ceiling-Temperaturen sind zum Beispiel Polymethacrylate, Poly-α-methylstyrol oder Polyoxymethylene, die ohne depolymerisationshemmende Comonomere hergestellt wurden. Bevorzugt wird eines dieser Polymere erfindungsgemäß im Verfahren eingesetzt, besonders bevorzugt werden Polymethacrylate oder Poly-α-methylstyrol verwendet.

Insbesondere bei einem Brennvorgang in Sauerstoff-haltiger Atmosphäre findet gleichfalls eine oxidative Zersetzung der Polymere bzw. der in der Keramik verbliebenen Monomere, z.B. in Form eines Verbrennens, statt. Um eine daraus resultierende Verkohlung zu minimieren kommt eine zweite, bevorzugte Eigenschaft des eingesetzten Polymers zu tragen. Um das vollständige Verbrennen zu verbessern, werden Polymere mit einem relativ hohen Sauerstoffanteil bevorzugt. Das Polymer sollte einen Sauerstoffanteil von mindestens 25 Gew%, bevorzugt von mindestens 30 Gew% aufweisen. Damit sind Polymethacrylate insbesondere bevorzugt. Ganz besonders bevorzugt werden Polymethacrylate mit einem Methylmethacrylat-Anteil (MMA) von mindestens 80 Gew%, insbesondere von mindestens 90 Gew%, ganz besonders bevorzugt reines PMMA verwendet.

### b) Partikelgröße und Korngrößenverteilung

Die Partikelgröße kann über einen breiten Bereich variieren. Die Größe der verwendeten Partikel hängt direkt von der Größe der angestrebten Poren ab. Es werden Partikel mit einem Durchmesser zwischen 5 µm und 3 mm eingesetzt.

Unter Partikelgröße wird in dieser Schrift die eigentliche mittlere Primärteilchengröße verstanden. Da die Bildung von Agglomeraten nahezu ausgeschlossen ist, entspricht die mittlere Primärteilchengröße in der Regel der tatsächlichen Partikelgröße. Die Partikelgröße entspricht weiterhin in etwa dem Durchmesser eines annähernd rund erscheinenden Teilchens. Bei nicht rund erscheinenden Teilchen wird der mittlere Durchmesser als Durchschnittswert aus dem kürzesten und dem längsten Durchmesser ermittelt. Unter Durchmesser wird in diesem Zusammenhang eine Strecke von einem Punkt am Rand des Partikels zu einem anderen verstanden. Zusätzlich muss diese Linie den Mittelpunkt des Partikels durchqueren.
Die Partikelgröße kann der Fachmann z. B. mit Hilfe der Bildanalyse oder statischer Lichtstreuung ermitteln.

Insbesondere der Zusatz von rückstandsfrei verbrennenden Polymerpartikeln mit monomodaler, enger Größenverteilung ermöglicht die Einstellung eines Werkstoffgefüges mit sphärischen, homogen verteilten und isolierten Poren. Dabei liegt die Korngrößenverteilung der Polymerpartikel zwischen 0,5 und 2,0, bevorzugt zwischen 0,7 und 1,5. Die Korngrößenverteilung wird bevorzugt mittels eines Coulter-Messgeräts bestimmt.

Entsprechend ergeben sich Poren mit einer im Idealfall monomodalen Porengrößenverteilung. Diese Porengrößenverteilung kann, muss jedoch nicht in etwa der Korngrößenverteilung der eingesetzten Polymerpartikel ähneln. Bevorzugt liegt diese zwischen 0,2 und 4,0, bevorzugt zwischen 0,5 und 2,0. Die Porengrößen lassen sich z.B. mittels Ausmessen mikroskopischer Aufnahmen ermitteln.

Alternativ können auch verschiedene Partikel mit bevorzugt in sich jeweils monomodaler Korngrößenverteilung verwendet werden.

### c) Form der Partikel

Die Partikel sind im Idealfall nahezu kugelförmig, bzw. gleichbedeutend sphärisch.
Die Oberflächen der Partikel sind in der Regel rund, können jedoch auch minimale Verwachsungen aufweisen. Als Maß der Geometrie-Annäherung an die Kugelform kann in bekannter Weise die Angabe eines Aspektverhältnisses dienen. Dabei weicht das maximal auftretende Aspektverhältnis maximal um 20% von dem durchschnittlichen Aspektverhältnis ab. Das heißt, die Partikel sind in ihrer Gesamtheit nahezu ideal sphärisch.
Die erfindungsgemäß eingesetzten Partikel haben ein durchschnittliches Aspektverhältnis von höchstens 1,4, bevorzugt höchstens 1,2 besonders bevorzugt höchstens 1,1. Unter dem maximalen Aspektverhältnis der Partikel wird das maximal bildbare relative Verhältnis von zwei der drei Dimensionen Länge, Breite und Höhe verstanden. Dabei wird jeweils das Verhältnis der größten Dimension zu der kleinsten der anderen beiden Dimensionen gebildet. Ein Partikel mit einer Länge von 150 µm, einer Breite von 50 µm und einer Höhe von 100 µm, weist beispielsweise ein maximales Aspektverhältnis (von Länge zu Breite) von 3 auf. Partikel mit einem maximalen Aspektverhältnis von 3 können z.B. kurze stäbchenförmige oder auch diskusförmige, tablettenähnliche Teilchen sein. Beträgt das maximale Aspektverhältnis der Partikel beispielsweise 1,2 oder darunter, weisen die Partikel eine mehr oder weniger kugelähnliche Gestalt auf.

Um sphärische Partikel zu erhalten werden die erfindungsgemäß verwendeten Polymerpartikel, insbesondere die Polymethacrylatpartikel mittels einer Suspensionspolymerisation hergestellt. Insbesondere Suspensionspolymerisate zeigen zumeist eine ausgeprägt sphärische Form. Die Suspensionspolymerisation, insbesondere von Methacrylaten, ist dem Fachmann allgemein bekannt und kann beispielsweise in "Kunststoffhandbuch Band IX: Polymethacrylate", Hrsg. R. Vieweg, Carl Hanser Verlag München 1975, Kap. 2.3.3 nachgelesen werden.

### d) Zusammensetzung des gegossenen keramischen Werkstoffs

Bei den erfindungsgemäß verwendeten Rohmassen zur Herstellung der gegossenen keramischen Werkstoffe kann es sich grundsätzlich um jede dem Fachmann zur Herstellung solcher Werkstoffe bekannten Rohmassen handeln. Insbesondere handelt es sich für Feuerfestanwendungen dabei um Oxidkeramiken wie Aluminiumoxid (Al₂O₃), Siliciumoxid (SiO₂), Chromoxid (Cr₂O₃), Zirkoniumdioxid (ZrO₂), Titan(IV)oxid (TiO₂), Magnesiumoxid (MgO), Zinnoxid, (SnO), oder feuerfeste Verbindungen der Oxide wie z.B. Mullit (3Al₂O₃*2SiO₂), Spinell (MgO*Al₂O₃), Zirkonsilikat (ZrO₂*SiO₂) Calciumaluminate (6Al₂O₃*CaO, CaO*Al₂O₃), Forsterit (2MgO*SiO₂), Calciumsilikat (2CaO*SiO₂), Calciumzirkonat (2CaO*ZrO₂), Cordierit (2MgO*2Al₂O₃*5SiO₂), Aluminiumtitanat (Al₂O₃*TiO₂) oder um Mischungen dieser Materialien.

Aber auch die Verarbeitung von nicht-oxidischen Keramiken mit dem erfindungsgemäßen Verfahren ist möglich. Zu den nicht-oxidischen Keramiken zählen Kohlenstoff, die Carbide, wie beispielsweise Bor- oder Siliziumcarbid; bzw. Nitride, wie beispielsweise Bornitrid (BN), Siliziumnitrid (Si₃N₄) oder Aluminiumnitird (AIN); Boride wie z.B: Zirkondiborid (ZrB₂), Calciumhexaborid (CaB₆). Es können auch unterschiedlich zusammengesetzte Mischungen aus oxidischen und nichtoxidischen Rohstoffen zur Anwendung kommen.

Insbesondere bevorzugt sind Korundwerkstoffe, also Aluminiumoxid, bzw. Mullitwerkstoffe, Hochtonerde Werkstoffe mit Korund (Al₂O₃) und Mullit als Hauptkomponenten, Schamottewerkstoffe mit Mullit als Hauptkomponente, Mullit-Cordieritwerkstoffe und Spinellwerkstoffe (MgO*Al₂O₃).

### e) Herstellverfahren

Die erfindungsgemäßen leichten Keramikwerkstoffe können nach jedem allgemein bekannten Verfahren als geformte und als ungeformte Erzeugnisse hergestellt werden. Dabei können die Erzeugnisse vor dem Einsatz bei hohen Temperaturen i.R. > 1000 °C gebrannt oder aber im niedrigeren Temperaturbereich thermisch behandelt werden.

Der wesentlichste Arbeitsschritt in allen Werkstoffausführungen ist die Einbringung der rückstandsfrei verbrennenden Polymerpartikeln in eine Keramikrohmasse. Ihre Beschaffenheit, wie Kornaufbau, Wassergehalt, Bindemittel Rheologie usw., richtet sich nach der verwendeten Formgebungstechnik. Dabei werden je nach Keramik z.B. bis zu 95 Vol% oder auch nur maximal 70 Vol% der Polymerpartikel eingebracht. Die maximale Menge bestimmt sich dadurch, dass dafür Sorge zu tragen ist, dass die Polymerpartikel nicht miteinander in Kontakt kommen.
Das darauf folgende Mischverfahren wird derart durchgeführt, dass die homogene Verteilung der Polymerpartikel zum einen gewährleistet bleibt und zum anderen eine gute Durchmischung erreicht wird. Dies ist abhängig von Faktoren wie der Art und der Beschaffenheit der Keramikrohmasse einzustellen. Unter Art versteht man in diesem Zusammenhang die Form, in der die Keramikrohmasse vorliegt. Z.B. trocken oder halbtrocken bzw. plastisch oder gießfähig. Unter Beschaffenheit versteht man Faktoren wie Kornaufbau, Wassergehalt, Art des Bindemittels, Rheologie usw..

Besonders dazu geeignet sind die weiter oben aufgeführten Polymere. Ganz besonders geeignet sind die bevorzugt verwendeten Suspensionspolymerisate aus Polymethacrylat mit einem sehr hohen MMA-Anteil.
Nach Herstellung der gemischten, die Polymerpartikel enthaltenden Keramikrohmasse folgen abhängig von der Produktart und -anwendung weitere Arbeitsschritte.

### Geformte Erzeugnisse

Aus der Keramikmasse mit homogen verteilten Polymerpartikeln wird unter Verwendung allgemein bekannter Formgebungstechniken ein Gegenstand mit der gewünschten Geometrie geformt. Die Wahl eines geeigneten Formgebungsverfahrens ist dabei von der Geometrie des Endproduktes und der damit zusammenhängenden Beschaffenheit der Keramikmasse abhängig.

Die Formgebung kann z.B. durch Schlickerguss, Spritzguss, Formen plastischer Massen oder andere Formungsverfahren erfolgen. Es ist auch denkbar die Keramik ungeformt zu brennen und anschließend z.B. durch Schneiden oder Schleifen zu formen.

### Geformte ungebrannte Erzeugnisse

Nach der Fomgebung und ggbf. Abbindung werden die Erzeugnisse aus der Form entnommen und einer thermischen Behandlung unterzogen. Diese schließt die in der Keramiktechnologie üblichen Arbeitsgänge ein. In den meisten Fällen beginnt die thermische Behandlung bei Temperaturen unterhalb 200 °C. In diesem Schritt werden die geformten Erzeugnisse getrocknet.

Im Falle der chemisch gebundenen Werkstoffe bzw. Werkstoffe mit Kohlenstoffbindung dient dieser Arbeitsschritt auch der Aushärtung der eingesetzten Bindemittel. Als chemische Bindung kommen allgemein bekannte Bindemittel zur Anwendung, z.B. Phosphorsäure, wässrige Lösungen der Phosphate bzw. Sulfate, Wasserglas, Kieselsol usw. In einigen Fällen kommen, speziell in Feuerfestprodukten, synthetische und natürliche Harze, Pech, Teer usw. als sogenannte Kohlenstoffbindung zum Einsatz. Für einige Erzeugnisse aus dieser Produktgruppe endet der Herstellungsprozess nach der Trocknung, da sie durch die chemische Bindung die geforderten Einsatzeigenschaften erreicht haben. In vielen Fällen können die chemischgebundenen Erzeugnisse, Produkte mit Kohlenstoffbindung bzw. Erzeugnisse mit hydraulischer Bindung z.B. Feuerfestbetone, dem sog. Tempern unterzogen werden. Als Tempern bezeichnet der Fachmann eine Temperaturbehandlung im Temperaturbereich unterhalb 1000 °C. Die Temperatur ist von der keramischen Masse abhängig, mindestens jedoch bei einer Temperatur die mindestens 100 °C, bevorzugt 200 °C oberhalb der Ceiling-Temperatur der in den Polymerpartikeln enthaltenen Polymeren liegt. In diesem Prozessschritt werden Zersetzungsprozesse der Polymerpartikeln und der Bindemittel durchgeführt und die dabei freiwerdenden flüchtigen Zersetzungsprodukte kontrolliert aus dem Werkstoff herausgetrieben. Als Beispiel ist Kristallwasser aus der chemischen bzw. hydraulischen Bindung und Zersetzungsprodukte der Kohlenstoffbindung zu nennen.

Nach dem Tempern ist die Temperaturbehandlung für einige Produkte abgeschlossen, da sie die geforderten Einsatzeigenschaften bereits nach dem Tempern erreicht haben. Als Beispiel sind Hochtonerdewerkstoffe mit Phosphatbindung und Korundwerkstoffen bzw. Magnesiawerkstoffe mit Kohlenstoffbindung zu erwähnen.

### Geformte gebrannte Erzeugnisse

Die getrockneten Produkte, sog. Grünlinge, werden dem keramischen Brand unterzogen. Eine spezielle Produktgruppe bilden Keramikwerkstoffe, die mittels Spritzguss hergestellt werden. Die Produkte werden unter Verwendung von relativ großen Mengen von organischen Zusatzstoffen wie z.B. Wachsen erzeugt, die vor einem Hochtemperatur-Brand in einem speziellen Arbeitsgang der sog. Entbinderung im Temperaturbereich unterhalb 1000 °C entfernt werden müssen.

Der keramische Brand wird so durchgeführt, dass die Keramikpartikeln der Werkstoffmatrix möglichst dicht versintert wird. Dabei sollen die sphärischen isolierten Poren in der Form und Anteil erhalten bleiben. Dazu eignet sich sowohl sog. Trocken-Sintern ohne eine Flüssigphase als auch Sintern in Gegenwart eine Flüssigphase. Im letzten Fall kann die Werkstoffmatrix teilweise bzw. vollständig verglasen. Die Temperatur des keramischen Brandes erfolgt bei einer Temperatur, die von der keramischen Masse abhängig ist. Mindestens jedoch bei einer Temperatur die mindestens 200 °C, bevorzugt mindestens 300 °C und besonders bevorzugt mindestens 500 °C oberhalb der Ceiling-Temperatur der in den Polymerpartikeln enthaltenen Polymeren liegt.
Zur Unterstützung des Sinterprozesses können dem Versatz reaktive, sinteraktive Komponenten, z.B. Nano-Pulvern, Mikropulvern, Sinterhilfsmittel, Glasbildner zugesetzt werden.

Es ist dabei nicht notwendig, die Werkstoffmatrix vollständig auf eine Porosität von 0% zu verdichten. Abhängig von dem Einsatzbereich kann die Matrix eine Restporosität enthalten. Ausschlaggebend ist die Größe der Matrixporen. Die Poren sollen lediglich so klein sein, dass sie das Eindringen schädlicher Stoffe wie Wasser, Schlacken oder Metallschmelzen verhindern.

Grundsätzlich hat eine hohe Verdichtung bei der Durchführung des erfindungsgemäßen Verfahrens den Nachteil, dass der Monomerabzug erschwert ist und unter Umständen nur unvollständig erfolgt. Eine Verdichtung der Keramikmatrix ist alternativ und, wenn benötigt, durch entsprechende Steuerung des Brennregimes der Keramik möglich.

### Ungeformte Erzeugnisse

Als ungeformte werden Mischungen aus Zuschlagstoffen und Hilfs- bzw. Zusatzstoffen, in erster Linie Bindemitteln, bezeichnet. Sie sind zum direkten Gebrauch entweder im Anlieferungszustand oder nach Zugabe geeigneter Flüssigkeiten aufbereitet. Die isolierenden FF-Erzeugnisse weisen, eine Gesamtporosität von > 45 % auf. Nach dem Erhärten, Trocknen und Aufheizen entsteht eine Ofenauskleidung. Die ungeformten keramischen Erzeugnisse, insbesondere die feuerfesten ungeformten Produkte, gewinnen ständig an Bedeutung. Neben den Feuerfest-Betonen finden weitere ungeformte Keramikprodukte, z.B. Mörtel, Kitte, Stampfmassen, Spritzmassen, usw. einen breiten Einsatz.

### Gegossene Betone

In einer besonderen Ausführungsform handelt es sich bei den erfindungsgemäßen Keramiken um gegossene Betone. Der folgende Abschnitt beschreibt diesen besonderen Aspekt, ohne dazu geeignet zu sein, die Erfindung in irgendeiner Form einzuschränken.

Ein gegossener keramischer Werkstoff wird bevorzugt aus feinkörnigen Feuerfestbetonen bzw. Rohmassen bevorzugt aus selbstfließenden Massen hergestellt. Diese Rohmassen zeichnen sich dadurch aus, dass der Anteil von Partikeln, die größer sind als 0,6 mm kleiner 10 Gew%, bevorzugt kleiner 5,0 Gew% und besonders bevorzugt kleiner 1,0 Gew% ist. Diese Feuerfestbetone sind jedoch nur eine mögliche Ausführungsform der vorliegenden Erfindung. Das erfindungsgemäße Verfahren zur Porenbildung ist auf jegliche Art von Keramikmassen übertragbar. Feuerfestmaterialien stellen dabei nur eine bevorzugte Ausführungsform dar.

Zur Verbesserung der rheologsichen Eigenschaften bzw. zur Verbesserung der Materialfestigkeit im so genannten Grünzustand (d.h. im ungebrannten Zustand) können der Masse diverse Hilfs- und Zusatzstoffe wie beispielweise Verflüssiger, Stellmittel oder Bindemittel zugeschlagen werden. Für die Produktion ungebrannter Erzeugnisse, wie z.B. Feuerfest-Betone oder Stampfmassen, können die Massen mit Hilfe von bekannten hydraulischen Bindemitteln, wie Feuerfest-Zement, bzw. chemischer Bindemitteln, wie z.B. Wasserglas, Phosphatverbindungen, Magnesiumsulfat oder Polysiloxanbindern, hergestellt werden.

Zwecks Verbesserung der Einsatzeigenschaften können außerdem der Masse weitere Zusatzstoffe, wie z.B. Metall-, Glas- Keramikfasern, bzw. andere Porosiermittel, beigemischt werden.

Die erfindungsgemäß verwendeten Polymerpartikel werden in die Keramikrohmasse eingerührt. Die dazu benötigten Prozessparameter, wie Rührergeometrie, Rührgeschwindigkeit und -dauer, ergeben sich aus der Zusammensetzung der Keramikrohmasse, der Größe der Polymerpartikel und deren Anteil. Dieser Mischvorgang kann vor, während oder nach Zugabe weiterer Zuschlagsstoffe in die Keramikrohmasse erfolgen. Das Einrühren und/oder Mischen erfolgt in einer ersten Ausführungsform trocken. In einer alternativen Ausführungsform können auch Suspensionen aus Polymerpartikeln in einer Flüssigkeit, bei der es sich bevorzugt um Wasser, ein Kunstharz oder einen Alkohol handelt, eingesetzt werden. Wässrige Suspensionen fallen beispielsweise bei einer Suspensionspolymerisation als Primärprodukt an und können so direkt der Keramikmasse zugegeben werden. Dabei kann das Wasser der Suspension gleichzeitig als so genanntes Anmachwasser der Keramikrohmasse eingesetzt werden.

Nach dem Mischen wird die fertig formulierte Keramikrohmasse in eine Form gegossen. Bei dieser Form kann es sich um eine Holz-, Kunststoff-, Metall-, Gips- oder Keramikform, bzw. um einen Abdruck in Sand oder einer feuerfesten Masse handeln. Diese Rohmasse wird in der Form bei einer ersten Temperatur T₁, die z.B. Raumtemperatur sein kann, die zwingend unter der Ceilingtemperatur und bevorzugt unterhalb der Glastemperatur des Polymers liegt für eine Zeit t₁ abgebunden bzw. verfestigt. T₁ und t₁ ergeben sich dabei aus der Zusammensetzung der verwendeten Keramikrohmasse und sind dem Fachmann bekannt. Nach dem Abbinden bzw. der Verfestigung wird das keramische Vorprodukt aus der Form entfernt und einem allgemein bekannten Trocknungsprozess unterzogen. Alternativ kann die abgebundene Keramikrohmasse auch in der Form verbleiben und nach dem Brennvorgang entfernt werden. In einer dritten alternativen Ausführungsform wird die Form während des Brennvorgangs rückstandsfrei verbrannt und dadurch entfernt.

Der Brennvorgang erfolgt bei einer wiederum materialspazifischen Temperatur T₂, die zwingend über der Ceilingtemperatur des Polymers und der Siedetemperatur der freigesetzten Monomere liegt, bevorzugt liegt T₂ mindestens 200 °C, bevorzugt mindestens 300 °C, besonders bevorzugt mindestens 500 °C oberhalb der Ceiling- bzw. Siedetemperatur, je nachdem welche der beiden die höhere ist. In der Regel erfolgen solche Brennvorgänge von Keramiken oberhalb von 1000 °C, insbesondere oberhalb von 1200 °C. Die dazu benötigte Zeit t₂ wiederum ergibt sich aus der Zusammensetzung der Keramik sowie der Form und vor allem der Masse des zu brennenden Werkstoffs.

Der Brennvorgang kann unter einem Schutzgas, in einer Luftatmosphäre oder sogar in einer mit Sauerstoff angereicherten Atmosphäre erfolgen, ohne dass es zu einer nennenswerten Bildung von Russ- bzw. Vercracungsprodukten in den Poren oder am Werkstoff käme. Ein besonderer Vorteil der vorliegenden Erfindung ist, dass das Verfahren auch unter Sauerstoffausschluss und damit auch an oxidationsempfindlichen Werkstoffen durchgeführt werden kann. Dies ist mit Porenbildnern nach Stand der Technik nicht möglich. Die beim Brennen unter Sauerstoffausschluss frei werdenden Monomere sollten bevorzugt über eine entsprechende Vorrichtung abgesaugt und gesammelt werden.

Bei einem Brennen in einer sauerstoffhaltigen Atmosphäre, bevorzugt einer sauerstoffhaltigen Atmosphäre mit vermindertem Druck verbrennen die nach der Depolymerisation freigesetzten Monomere nahezu vollständig zu Wasser sowie Kohlendioxid und/oder Kohlenmonoxid. Dabei ist besonders bevorzugt die Verwendung eines sauerstoffreichen Polymers mit einem Sauerstoffanteil von mindestens 25 Gew%. Ein solches Polymer verbrennt besonders russfrei. Ein Beispiel für ein solches Polymer ist reines Polymethylmethacrylat.

Für die Herstellung ungeformter feuerfester Erzeugnisse wie beispielweise Betone, Stampfmassen usw. wird die Keramikmasse nach allgemein bekannten Technologien vor Ort in Industrieanlagen installiert und der Anwendung zugeführt.

### Keramikwerkstoffe

Auch Bestandteil der vorliegenden Erfindung sind neuartige, mittels des erfindungsgemäßen Verfahrens herstellbare Keramikwerkstoffe. Dabei handelt es sich um leichte, bevorzugt feuerfeste keramische Werkstoffe mit einem Porenanteil zwischen 40 und 70 Vol%.

Die Poren sind dabei sphärisch und bevorzugt überwiegend isoliert, mit einem maximalen durchschnittlichen Aspektverhältnis von höchstens 1,4, bevorzugt höchstens 1,2 besonders bevorzugt höchstens 1,1, analog zu den eingesetzten Polymerpartikeln. Die Poren der erfindungsgemäß hergestellten Keramik ähneln in Ihrer Größe der Größe der eingesetzten Polymerpartikel, können dabei von dieser jedoch bis zu 25% abweichen, insbesondere größer sein. Die Poren haben damit einen Durchmesser zwischen 4 µm und 3,5 mm, besonders bevorzugt zwischen 7,5 µm und 1,25 mm und ganz besonders bevorzugt zwischen 15 µm und 250 µm.

Weiterhin zeichnen sich die erfindungsgemäßen keramischen Werkstoffe dadurch aus, dass sie einen Russanteil kleiner 0,05 Gew% und besonders bevorzugt kleiner 0,01 Gew% aufweisen.

Eine gleichfalls den Keramikwerkstoff beschreibende Größe ist die Porosität bzw. die relative Dichte. Die relative Dichte ist definiert durch den Quotienten aus Rohdichte und Reindichte evtl. prozentuell ausgedrückt. Unter Rohdichte versteht man die Dichte des porösen Körpers einschließlich der Poren. Unter Reindichte versteht man die Dichte der Keramikmatrix ohne Berücksichtigung der Poren.

Poröse keramische Werkstoffe spielen eine wichtige Rolle als wärmedämmende Materialien sowohl in der Bauindustrie als auch in der Feuerfestindustrie. Für die erfindungsgemäßen keramischen Werkstoffe lassen sich jedoch auch weitere Anwendungsgebiete, wie die Reaktortechnik, Katalysatortechnik, Leichtbautechnik, wie leichte Baukeramiken oder wärmedämmende Dachziegel, wärmedämmende Wandfliesen, Geschirrkeramiken bis hin zur Schmuckherstellung als Beispiele denken. Insbesondere geeignet sind die erfindungsgemäß hergestellten Werkstoffe für Hochtemperaturanwendungen wie z.B. die Innenisolierung von Hochtemperaturöfen oder die Konstruktion von Tunnelofenwagen. Dabei kann das Keramikprodukt als geformtes bzw. als ungeformtes Erzeugnis hergestellt und eingesetzt werden. Ungeformte Erzeugnisse können anschließend zugeschnitten, gesägt oder geschliffen werden. Weiterhin kann das Keramikprodukt als gebranntes oder als ungebranntes Erzeugnis hergestellt und weiterverarbeitet werden.

### Beispiele

### Messmethoden:

Korngrößenverteilung der Polymerpartiklen: Messung erfolgt mit einem Coulter-Meßgerät LS 200. Probenvorbereitung: In einem 50 ml Becherglas werden 2 Spatel Probesubstanz in ca. 20 ml VE-Wasser aufgeschlämmt. Anschließend wird ein Tropfen Triton X-100 Lösung zugegeben und die Probe 1 Min. im externen Ultraschallbad entlüftet.

Messvorgang: Die Messung erfolgt bei einer Konzentration von 9% bis 11%. Der Messablauf erfolgt rechnergesteuert. Es werden drei Einzelmessung durchgeführt. Die angegebenen Ergebnisse sind der gemittelte Wert d_{V50} aus diesen.

Thermogravimetrische (TGA) Untersuchungen in Luftatmosphäre mit einer Aufheizrate von 5 K/min bis zu einer Maximaltemperatur von 1000 °C. Diese Temperatur wird dabei gehalten, bis Gewichtskonstanz vorliegt.
Einwaage: reine Polymerpartikel: ca. 2 g
Polymerpartikel eingebettet in einer FF-Matrix: ca. 20 g

Die Bestimmung der Grundeigenschaften der untersuchten Werkstoffe erfolgte in Anlehnung an folgende EN DIN-Normen:
Offene Porosität (OP) und Rohdichte (RD): nach EN DIN 993-1
Kaltdruckfestigkeit (KDF): nach EN DIN 993-5
Schwindung (S):nach EN DIN 993-10

Bei den verwendeten Polymeren der Degacryl-Typen (verfügbar über die Firma Evonik Röhm GmbH) handelt es sich um Suspensionspolymerisate aus reinem PMMA. Im Einzelnen haben die verwendeten Produkte folgende Charakteristika. Das Gewichtsmittel des Molekulargewichts wurde dabei mittels Gelpermeationchromatographie (GPC) bestimmt.
DEGACRYL M449: PMMA mit M_{w}: 400.000 - 500.000 und d_{y50}: 90 - 110 µm
DEGACRYL M527: PMMA mit M_{w}: 450.000 - 560.000 und d_{y50}: 33 - 41 µm
DEGACRYL M546: PMMA mit M_{w}: 400.000 - 500.000 und d_{y50}: 55 - 70 µm

### A) Leichte wärmedämmende Keramiken

### Beispiele 1- 4: leichte gegossene Feuerfestwerkstoffe

Als Keramikrohmasse wurde ein feinkörniger Feuerfestbeton als Gemisch aus calcinierter Tonerde (CT) und einem Polymerkörper untersucht. Um den Einfluss eines grobkörnigeren Aluminiumoxids zu studieren, wurden auch Mischungen mit Sinterkorund (T60, Partikelgröße kleiner 45 µm) untersucht. Als Bindemittel kamen dabei 4 Gew.-Anteile Calciumaluminat Feuerfestzement zum Einsatz: Die Betonmasse wurde mit 12 Gew% (auf 100 Anteile Trockenmasse) Wasser (so genanntes Anmachwasser) hergestellt. Als Polymerkörper wurde DEGACRYL M449 (M449) in unterschiedlichen Zusatzmengen verwendet. Die Polymerpartikel wurden zunächst durch Rühren mit der fertig gemischten Betonrohmasse gemischt. Aus der Polymerpartikel enthaltenden Keramikrohmasse wurden zylindrische Prüfkörper (Durchmesser und Höhe 46 mm) gegossen. Dies erfolgte durch Gießen in eine Kunststoffform. Anschließend wurden die Prüfkörper 4 Stunden bei 110 °C getrocknet. Nach dem Trocknen wurde die Keramik 4 Stunden bei 1500 °C in Luftatmosphäre gebrannt. Die Zusammensetzung der untersuchten Mischungen und die Eigenschaftenn der gebrannten Prüfkörper sind in Tabelle 1 zusammengestellt.

Die Beispiele 2, 3 und 4 entsprechen nicht der vorliegenden Erfindung.

**Tabelle 1 Leichte gegossene Feuerfestwerkstoffe**

| | Zusammensetzung (%) | | | Rohdichte (gebrannt) | | Kaltdruckfestigkeit | Schwindung |
|---|---|---|---|---|---|---|---|
| | *CT* | *T60* | *M449* | *(g*/*cm³)* | *relativ (%)* | *(N*/*mm²)* | *(%)* |
| Beispiel 1 | 50,0 | - | 50,0 | 0,76 | 19,5 | 0,8 | 2,8 |
| Beispiel 2 | 31,3 | 31,3 | 37,5 | 0,95 | 24,4 | 3,1 | 1,3 |
| Beispiel 3 | 65,0 | - | 35,0 | 1,13 | 29,0 | 1,7 | 4,7 |
| Beispiel 4 | 31,3 | 31,3 | 37,5 | 0,85 | 21,8 | 0,6 | 1,7 |

### Ergebnisse

- Die erfindungsgemäßen gegossenen Feuerfest-Leichtwerkstoffe zeichnen sich durch sehr niedrige Werte der Rohdichte aus. Diese liegt zwischen ca. 16 und 30 % des theoretischen Werts. Dies entspricht einer Porosität zwischen 70 und 84 %.
- Die Verdichtung des Gefüges lässt sich durch Höhe des Polymerpartikel-Anteils steuern.
- Die Werkstoffe weisen eine für den Materialtyp charakteristische, durch die hohe Porosität begründete niedrige Kaltdruckfestigkeit auf. Der KDF-Wert kann durch gezielte Maßnahmen zusätzlich positiv beeinflusst werden. Dazu zählt u.a. der partielle Ersatz der calcinierten Tonerde durch feinen Sinterkorund.
- Aus den in den Zeichnungen angehängten TGA-Messungskurven geht klar hervor, dass die erfindungsgemäß verwendeten Polymerpartikel rückstandsfrei aus der Keramik bei Temperaturen kleiner 500 °C entfernt werden können.

### Beispiel 5: leichte gegossene Korundwerkstoffe (mit Vergleichsbeispiel 1)

Als Keramikrohmasse wurde ein Schlicker aus 90 Gew% calcinierter Tonerde und 10 Gew% eines Calciumaluminats als Bindemittel hergestellt. Die Betonmasse wurde mit 14,5 Gew% (auf 100 Anteile Trockenmasse) Anmachwasser versetzt. Als Polymerpartikel wurden 30 Gew% DEGACRYL M527 (M527) (bezogen auf 100 Gew% Schlicker) verwendet. Die Polymerpartikel wurden zunächst durch Rühren mit der fertig gemischten Keramikrohmasse gemischt. Aus der Polymerpartikel enthaltenden Keramikrohmasse wurden anschließend zylindrische Prüfkörper (Durchmesser und Höhe 46 mm) gegossen. Dies erfolgte durch Gießen in eine Kunststoffform. Anschließend wurden die Prüfkörper 4 Stunden bei 110 °C getrocknet. Nach dem Trocknen wurde die Keramik 4 Stunden bei 1500 °C in Luftatmosphäre gebrannt.

Zum Vergleich wurden Mischungen mit 20 Gew% eines herkömmlichen ausbrennbaren Zuschlagstoffes (Späne) mit untersucht. Um diese Zuschlagstoffmenge in die Keramikmasse einarbeiten zu können, musste der Wasserzusatz auf ca. 28 Gew% erhöht werden. Die sonstigen Herstellungs- und Untersuchungsbedingungen waren identisch. Die erzielten Ergebnisse zeigt Tabelle 2.

Beispiel 5 entspricht nicht der vorliegenden Erfindung.

**Tabelle 2 leichte gegossene Korundwerkstoffe**

| | Zuschlagstoff | | getrocknet | | gebrannt | | | |
|---|---|---|---|---|---|---|---|---|
| | Bezeichnung | Menge (Gew%) | RD | KDF | RD | | KDF | Schwindung |
| | | | g/cm³ | N/mm² | g/cm³ | relativ (%) | N/mm² | % |
| Beispiel 5 | DEGACRY L M527 | 30 | 1,90 | 13,3 | 1,57 | 39,3 | 43,0 | 5,2 |
| Vergleichs -beispiel 1 | Herkömmlich | 20 | 1,58 | 0,8 | 1,55 | 38,8 | 24,7 | 5,1 |

### Ergebnisse

- Die Keramikmasse mit DEGACRYL-Zusatz bedarf trotz einer höheren Zuschlagmenge wesentlich weniger (ca. 50 %) Anmachwasser im Vergleich zum herkömmlichen Produkt
- Die Festigkeit der getrockneten Masse DEGACRYL-Masse ist verglichen mit dem herkömmlichen Zuschlagstoff sehr hoch
- Bei einer in etwa gleichen Rohdichte zeichnen sich die gebrannten Keramikmassen mit Polymeranteilen durch eine sehr hohe Festigkeit. Sie ist um fast 75 % höher als die der Werkstoffe mit herkömmlichen mit dem anderen Zuschlagstoff

### Beispiele 6-9: leichte gegossene Mullitwerkstoffe (mit Vergleichsbeispiel 2)

Es wurde mittels Rühren eine homogene Mischungen aus einer Mullitrohmischung und Degacryl M449 hergestellt. Bei der Mullitrohmischung handelte es sich um ein Rohstoffgemisch, welches großtechnisch zur Herstellung eines Mullitsinters verwendet wird. Der Feuchtegehalt der Mischung betrug ca. 16 Gew%. Der Degacryl-Anteil lag je nach Beispiel in einem Bereich zwischen 10 und 70 Gew% (siehe Tabelle 3). Der Anamachwasserbedarf betrug abhängig vom Degacryl-Anteil zwischen 33 und 45 Gew%. Die keramischen Rohstoffe wurden zunächst mit dem Anmachwasser gemischt. Degacryl M449 wurde zum Schluss des Mischvorgangs eingeführt und homogen verteilt. Die Herstellung der Prüfkörper (Durchmesser und Höhe jeweils 46 mm) erfolgte ohne Binder durch Gießen in eine Kunststoffform. Die Formlinge wurden bei 110 °C, 24h getrocknet. Anschließend wurden die Prüfkörper einem zweistufigen Brennprozess in Luftatmosphäre mit folgenden Parametern unterzogen:
Stufe I. Brenntemperatur 1000 °C, Aufheizrate 1 K/min, ohne Haltezeit
Stufe II. Brenntemperatur 1600 °C, Aufheizrate 5 K/min, Haltezeit 4 h

An getrockneten Prüfkörpern erfolgte die Bestimmung der Rohdichte (RD). An gebrannten Proben wurden die Rohdichte (RD), die offene Porosität (OP), die Kaltdruckfestigkeit (KDF) und die Schwindung (S) bestimmt.

Die Beispiele 6 und 7 entsprechen nicht der vorliegenden Erfindung.

**Tabelle 3**

| | **Degacryl M449** | **H₂O-Bedarf** | **110°** C | **1000 °C** | | | **1600° C** | | | |
|---|---|---|---|---|---|---|---|---|---|---|
| | | | **RD** | **RD** | **OP** | **S** | **RD** | **OP** | **S** | **KDF** |
| | % | % | g/cm³ | g/cm³ | % | % | g/cm³ | % | % | N/mm² |
| VB 2 | 0 | 33,5 | 1,32 | 1,27 | 59,0 | 0,9 | 1,77 | 42,7 | 11,7 | 32,5 |
| Bsp. 6 | 10 | 34,0 | 1,27 | 1,10 | 64,7 | 1,0 | 1,58 | 49,2 | 12,7 | 27,4 |
| Bsp. 7 | 30 | 34,0 | 1,21 | 0,86 | 72,4 | 1,0 | 1,24 | 60,1 | 12,7 | 10,5 |
| Bsp. 8 | 50 | 42,5 | 1,14 | 0,70 | 77,3 | 1,9 | 1,02 | 67,1 | 13,5 | 7,8 |
| Bsp. 9 | 70 | 42,5 | 1,10 | 0,59 | 80,9 | 1,9 | 0,88 | 71,6 | 14,6 | 4,1 |

Die Angaben zum H₂O-Zusatz sind bezogen auf die Masse ohne Degacryl M449.

Die Ergebnisse zeigen, dass man mit dem Zusatz der Polymerpartikel leichte, hochporöse Mullitwerkstoffe mit guten Festigkeitswerten herstellen kann.

### Beispiele 10-13: leichte gegossene Al₂O₃-CA₆-Werkstoffe (mit Vergleichsbeispiel 3)

In diesen Beispielen wurden FF-Keramiken erfindungsgemäß hergestellt, die kommerziell verfügbaren Keramiken, enthaltend Calciumhexaaluminat (CaO*6Al₂O₃) als leichten mikroporösen Zuschlagstoff, entsprechen. Das besagte Produkt enthält ca. 8,5 Gew% CaO und ca. 91 Gew% Al₂O₃. Es weist eine offene Porosität von ca. 75 Vol% auf. Das Produkt wird als Körnung zur Herstellung leichter wärmedämmender FF-Erzeugnisse eingesetzt. Ein Nachteil des Werkstoffes ist der relativ hohe CaO-Gehalt, welcher die Korrosionsbeständigkeit und die thermomechanischen Eigenschaften der FF-Werkstoffe beeinträchtigt.
Mit diesen Beispielen wurden erfindungsgemäß Keramiken mit geringerem CaO-Gehalt aber mit zu dem herkömmlichen Produkt vergleichbaren wärmmedämmenden Eigenschaften hergestellt. Als Porenbildner kam Degacryl M 527 zum Einsatz.

Die als Schlicker verwendete Keramikmasse setzte sich aus 90 Gew% calcinierte Tonerde NO 645, 10 Gew% Calciumaluminatcement SECAR 71, 1 Gew% Verflüssiger (ADS, ADW) und unterschiedlichen Mengen Anmachwasser (siehe Tabelle 4) zusammen. Die rechnerisch ermittelte chemische Zusammensetzung nach dem Abbinden der verwendeten Mischung ist 3 Gew% CaO und 97 Gew% Al₂O₃. Dies entspricht einem Calciumhexaaluminat -Anteil von ca. 34 Gew%. Den Rest bildet Korund (α-Al₂O₃). Der Degacryl-Anteil lag je nach Beispiel in einem Bereich zwischen 10 und 70 Gew% (siehe Tabelle 4). Die keramischen Rohstoffe wurden zunächst mit dem Anmachwasser gemischt. Der Anamachwasserbedarf lag abhängig von dem Degacryl-Anteil zwischen 12 und 30 Gew% (siehe Tabelle 4). Degacryl M527 wurde zum Schluss des Mischvorgangs zugegeben und homogen verteilt. Die Herstellung der Prüfkörper (Durchmesser und Höhe jeweils 46 mm) erfolgte durch Gießen in eine Kunststoffform. Nach der Abbindung wurden die Formlinge bei 110 °C 24 h getrocknet. Anschließend wurden die Prüfkörper einem zweistufigen Brennprozess in Luftatmosphäre mit folgenden Parametern unterzogen:
Stufe I. Brenntemperatur 1000 °C, Aufheizrate 1 K/min, ohne Haltezeit
Stufe II. Brenntemperatur 1600 °C, Aufheizrate 5 K/min, Haltezeit 4 h

An getrockneten Prüfkörpern erfolgte die Bestimmung der Rohdichte (RD). An gebrannten Proben wurden die Rohdichte (RD), die offene Porosität (OP), die Kaltdruckfestigkeit (KDF) und die Schwindung (S) bestimmt.

Die Beispiele 10 und 11 entsprechen nicht der vorliegenden Erfindung.

**Tabelle 4**

| | **Degacryl M527** | **H₂O-Bedarf** | **110° C** | **1000 °C** | | | **1600° C** | | | |
|---|---|---|---|---|---|---|---|---|---|---|
| | | | **RD** | **RD** | **OP** | **S** | **RD** | **OP** | **S** | **KDF** |
| | % | % | g/cm³ | g/cm³ | % | % | g/cm³ | % | % | N/mm² |
| VB 3 | 0 | 12,5 | 2,67 | 2,58 | 33,8 | 0,1 | 3,07 | 21,4 | 6,0 | 261 |
| Bsp.10 | 10 | 12,5 | 2,37 | 2,13 | 45,5 | 0,4 | 2,48 | 36,5 | 5,6 | 217 |
| Bsp.11 | 30 | 14,5 | 1,95 | 1,45 | 62,9 | - 0,2 | 1,68 | 56,9 | 5,0 | 38 |
| Bsp.12 | 50 | 20,0 | 1,64 | 1,07 | 72,6 | - 0,1 | 1,30 | 66,6 | 6,7 | 21 |
| Bsp.13 | 70 | 30,0 | 1,40 | 0,83 | 78,7 | 0,9 | 1,03 | 73,5 | 8,2 | 9,8 |

Die Angaben zum H₂O-Zusatz sind bezogen auf die Masse ohne Degacryl M527. Der Zusatz Degacryl M527 bewirkt eine Steigerung der offenen Porosität. Bei einer Zugabe von über 30 Gew% ist sogar eine Steigerung auf mehr als 55 Vol% zu erzielen. Noch größere Zuatzmenge resultieren in leichten, hochporösen Werkstoffen mit einer offenen Porosität größer 70 Vol%. Insbesondere diese Werkstoffe zeichnen sich durch ein sehr gutes Verhältnis Festigkeit zu Rohdichte aus.

### Beispiele 14-17: leichte gegossene Kurondwerkstoffe mit Grobkorn-Anteilen (mit Vergleichsbeispiel 4)

Mit diesen Beispielen wird gezeigt, dass auch unter Zusatz von grobkörnigen Komponenten erfindungsgemäße leichte Keramikwerkstoffe herstellbar sind. Aufbauend auf den erzielten Ergebnissen der Vorversuche wurde für die Versuche eine Keramikmasse als Schlicker aus 47,5 Gew% Sinterkorund T60, 47,5 Gew% calcinierte Tonerde NO 645, 5 Gew% Calciumaluminatcement SECAR 71, 1 Gew% Verflüssiger (ADS, ADW) und Anmachwasser und unterschiedlichen Mengen Anmachwasser (siehe Tabelle 5) zusammen.

Als Polymerkörper wurde Degacryl M546 verwendet. Der Degacryl-Anteil lag in einem Bereich zwischen 10 und 70 Gew% (Mengen siehe Tabelle 5). Die keramischen Rohstoffe wurden zunächst mit dem Anmachwasser gemischt. Der Anamachwasserbedarf lag abhängig von dem Degacryl-Anteil zwischen 12 und 30 Gew% (siehe Tabelle 5). Degacryl M546 wurde zum Schluss des Mischvorgangs zugegeben und mittels Rühren homogen verteilt. Die Herstellung der Prüfkörper (Durchmesser und Höhe jeweils 46 mm) erfolgte durch Gießen in eine Kunststoffform. Nach der Abbindung wurden die Formlinge bei 110 °C 24h getrocknet. Anschließend wurden die Prüfkörper einem zweistufigen Brennprozess in Luftatmosphäre mit folgenden Parametern unterzogen:
Stufe I. Brenntemperatur 1000 °C, Aufheizrate 1 K/min, ohne Haltezeit
Stufe II. Brenntemperatur 1600 °C, Aufheizrate 5 K/min, Haltezeit 4 h

An getrockneten Prüfkörpern erfolgte die Bestimmung der Rohdichte (RD). An gebrannten Proben wurden die Rohdichte (RD), die offene Porosität (OP), die Kaltdruckfestigkeit (KDF) und die Schwindung (S) bestimmt.

Die Beispiele 14 und 15 entsprechen nicht der vorliegenden Erfindung.

**Tabelle 5**

| | **Degacryl M546** | **H₂O-Bedarf** | **110° C** | **1000 °C** | | | **1600° C** | | | |
|---|---|---|---|---|---|---|---|---|---|---|
| | | | **RD** | **RD** | **OP** | **S** | **RD** | **OP** | **S** | **KDF** |
| | % | % | g/cm³ | g/cm³ | % | % | g/cm³ | % | % | N/mm² |
| VB 4 | 0 | 12,5 | 2,64 | 2,58 | 33,8 | 0,1 | 2,90 | 25,6 | 4,1 | 227 |
| Bsp.14 | 10 | 12,5 | 2,33 | 2,07 | 46,9 | - 0,2 | 2,34 | 40,1 | 3,9 | 140 |
| Bsp.15 | 30 | 14,5 | 1,86 | 1,40 | 64,2 | - 0,2 | 1,56 | 60,0 | 3,8 | 23 |
| Bsp.16 | 50 | 20,0 | 1,53 | 1,00 | 74,2 | 0,3 | 1,14 | 70,9 | 4,5 | 12 |
| Bsp.17 | 70 | 30,0 | 1,33 | 0,75 | 80,9 | 0,2 | 0,87 | 77,6 | 5,3 | 3,8 |

Die Angaben zum H₂O-Zusatz sind bezogen auf die Masse ohne Degacryl M546.

Auch nach Zusatz einer Grobkornfraktion ist eine erfindungsgemäße FF-Keramik herstellbar. Zusätzlich lässt sich hier sogar die Brennschwindung der Werkstoffe mit Degacryl-Zusatz verringern. Auf der anderen Seite bringt der Grobkornanteil eine Reduzierung der Festigkeitswerte mit sich.

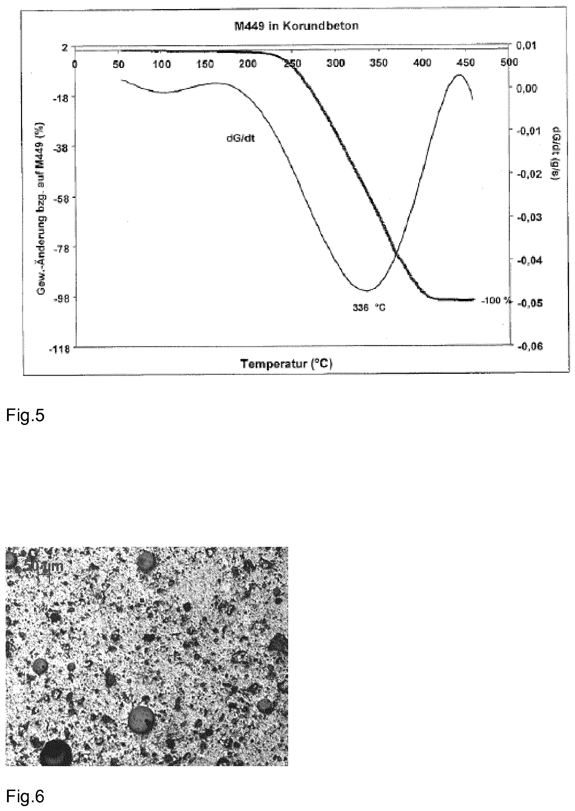

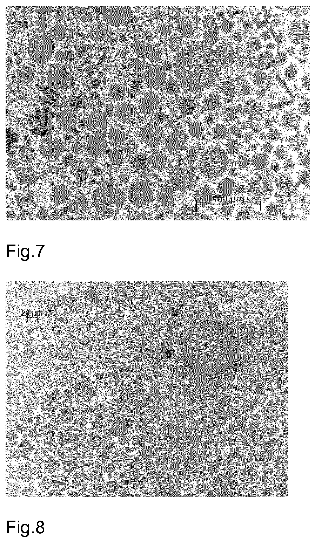

In den Abbildungen Fig.5-7 erkennt man gut, die Bildung sphärischer und isolierter Poren in den Materialien aus Beispielen 15 und 17, sowie das Fehlen entsprechender Poren bei Vergleichsbeispiel VB4.

### Beispiel 18: Vergleich mit herkömmlichen ausbrennbaren Zuschlagsstoffen (mit Vergleichsbeispiel 5)

Es wurde eine Keramikmasse als Schlicker aus 90 Gew% calcinierte Tonerde NO 645 und 10 Gew% Calciumaluminatcement SECAR 71 verwendet. Auf diese wurden zusätzlich 1 Gew% Verflüssiger (ADS + ADW) und 14,5 Gew Anmachwasser gegeben. Diese Masse wurde in zwei gleiche Portionen geteilt. Zu der ersten Portion nach Beispiel 18 wurden abschließend 30 Gew% Degacryl M527 gegeben, zu der zweiten Portion gemäß Vergleichsbeispiel 5 20 Gew% Späne. Beide Mengen der Zuschlagsstoffe weisen das gleiche Volumen auf.

Die Polymerpartikel werden in Beispiel 18 zunächst durch Rühren mit der fertig gemischten Keramikmasse gemischt. Aus dem Polymerpartikel enthaltenden Schlicker wurden zylindrische Prüfkörper (Durchmesser und Höhe jeweils 46 mm) durch Gießen in eine Kunststoffform hergestellt. Anschließend wurden die Prüfkörper 4 Stunden bei 110 °C getrocknet. Nach dem Trocknen wird die Keramik 4 Stunden bei 1500 °C in Luftatmosphäre gebrannt. Beispiel 18 entspricht nicht der vorliegenden Erfindung.

Bei Vergleichsbeispiel 5 wurde entsprechend unter Zugabe vont 20 Gew% eines herkömmlichen ausbrennbaren Zuschlagstoffes (Späne) verfahren. Um diese Zuschlagstoffmenge in den Schlicker Keramikmasse einarbeiten zu können, musste der Wasserzusatz auf ca. 28 Gew% erhöht werden. Die sonstigen Herstellungs- und Untersuchungsbedingungen waren in beiden Fällen gleich. Die erzielten Ergebnisse finden sich in Tabelle 5.

**Tabelle 5 Leichte gegossene Al₂O₃-Werkstoffe**

| | Zuschlagstoff | | | getrocknet | | gebrannt | | |
|---|---|---|---|---|---|---|---|---|
| | Bezeichnung | Menge % | RD g/cm³ | KDF N/mm² | RD g/cm³ | KDF | | Schrum -pfung |
| | | | | | | relativ (%) | N/mm² | % |
| Bsp.18 | DEGACRYL M527 | 30 | 1,90 | 13,3 | 1,57 | 39,3 | 43,0 | 5,2 |
| VB 5 | Späne | 20 | 1,58 | 0,8 | 1,55 | 38,8 | 24,7 | 5,1 |

Die Keramikmasse mit Degacryl-Zusatz bedarf trotz einer höheren Zuschlagmenge wesentlich weniger (um ca. 50 %) Anmachwasser im Vergleich zum Produkt nach Stand der Technik. Die Festigkeit der getrockneten Masse Degacryl-Masse ist verglichen mit dem Zuschlagstoff gemäß Stand der Technik sehr hoch. Bei einer in etwa gleichen Rohdichte zeichnen sich die gebrannten Keramikmassen mit Polymeranteilen durch eine sehr hohe Festigkeit. Sie ist um fast 75 % höher als die der Werkstoffe mit dem herkömmlichen Zuschlagstoff.

### Vergleichsbeispiel 19 und Vergleichsbeispiel 6: trocken gepresste Leichtwerkstoffe

Als Modell diente ein feinkörniger Mullitwerkstoff, max. Korngröße 100 µm. Als der ausbrennbare Zuschlagstoff kam DEGACRYL M449 zur Anwendung. Der Anteil des Polymers betrug 30 Gew%. Der Mullitrohstoff wurde mit dem DEGACRYL trocken gemischt. Als Binder wurden 10 Gew% der Sulfitablauge zugesetzt. Aus dem homogen gemischten Gemenge wurden durch uniaxiales Pressen in einer Stahlform zylindrische Standardprüfkörper 50x50 mm hergestellt. Der Pressdruck betrug 50 MPa. Die bei 110 °C 24 Stunden getrockneten Prüfkörper wurden bei 1500 °C 2 Stunden lang gebrannt. An gebrannten Prüfkörpern erfolgte die Untersuchung der Kaltdruckfestigkeit und der Rohdichte. Zum Vergleich wurden auch Mullitwerkstoffe mit 30 Gew.% Holzsägemehl untersucht. Die Herstellung und die Untersuchungen waren identisch. Die erzielten Ergebnisse zeigt Tabelle 6.

**Tabelle 6**

| | Ausbrennbarer Zuschlagstoff | Rohdichte | | KDF |
|---|---|---|---|---|
| | | (g/cm³) | relativ zu TD (%) | (N/mm²) |
| VB 19 | DEGACRYL M449 | 1.03 | 32.9 | 0.9 |
| VB 6 | Holzsägemehl | 1.03 | 32.9 | 0.4 |

| | | | | |
|---|---|---|---|---|
| TD = Theoretische Werkstoffdichte (Rheindichte) | | | | |

Die Festigkeit der mit DEGACRYL hergestellten leichten Mullitwerkstoffe ist im Vergleich zu konventionellem Zuschlagstoff um Faktor 2.2 höher.

### Beispiel 20 und Vergleichsbeispiel 7: plastisch geformte feuerfeste Leichtwerkstoffe

Dieses Beispiel betrifft konkret einen plastisch geformten Schamottewerkstoff. Als Grundrohstoff diente ein feuerfester Ton. Als der ausbrennbare Zuschlagstoff kam DEGACRYL M527 zur Anwendung. Die plastische Keramikmasse wurde aus 82 Gew% Ton und 12 Gew% Wasser hergestellt. Die Masse wurde dann mit dem Polymer im Verhältnis 30 Gew% DEGACRYL M527 auf 100 Gew% Keramikmasse homogen vermischt. Aus der plastischen Masse wurden würfelförmige Prüfkörper mit einer Kantenlänge von 30 mm hergestellt. Die bei 110 °C 24 h getrockneten Prüfkörper wurden bei 1000 °C 2 Stunden lang gebrannt. An gebrannten Prüfkörpern erfolgte die Untersuchung der Kaltdruckfestigkeit und der Rohdichte. Zum Vergleich wurden auch Schamottewerkstoffe mit Holzsägemehl untersucht (Vergleichsbeispiel 4). Wegen Schwierigkeiten mit der Herstellung der Masse mit hohen Holzsägemengen wurde der Anteil dieses Zuschlagstoffes auf 20 Gew% reduziert. Die sonstigen Herstellung- und Untersuchungsbedingungen bleiben unverändert. Die erzielten Resultate finden sich in Tabelle 7.

Beispiel 20 entspricht nicht der vorliegenden Erfindung.

**Tabelle 7: Eigenschaften plastischer leichter Schamottewerkstoffe**

| | Ausbrennbarer Zuschlagstoff | Zusatzmenge (Gew.-Anteile auf 100 Gew.-Anteile Keramikmasse) | Rohdichte (g/cm³) | KDF (Nmm²) |
|---|---|---|---|---|
| Beispiel 20 | DEGACRYL M527 | 30 | 0.83 | 4.5 |
| VB 7 | Holzsägemehl | 20 | 1.01 | 4.7 |

Die Festigkeit der mit DEGACRYL hergestellten leichten Schamotte ist bei um fast 20 % geringerer Rohdichte in etwa genau so fest wie die des mit traditionellem Zuschlagstoff hergestellten Erzeugnisses.

### B) Dichte Feuerfest-Keramiken

### Vergleichsbeispiele 21-25: Gepresste Korundwerkstoffe mit Vergleichsbeispiel 8

Ziel dieser Versuchreihe war der Vergleich verschiedener Degacryl-Sorten: DEGACRYL M449, DEGACRYL M527, DEGACRYL M546.

Die Zusatzmenge der Polymerpartikel beträgt:
Vergleichsbeispiel 8: 0 Gew%
Vergleichsbeispiel 21: 1 Gew% DEGACRYL M449
Vergleichsbeispiel 22: 5 Gew% DEGACRYL M449
Vergleichsbeispiel 23: 10 Gew% DEGACRYL M449
Vergleichsbeispiel 24: 5 Gew% DEGACRYL M527
Vergleichsbeispiel 25: 5 Gew% DEGACRYL M546

Die Versuche erfolgten an einem gepressten Korundwerkstoff mit folgendem Kornaufbau:
Sinterkorund: 1-2 mm- 50 Gew%
Sinterkorund 0.2-0.6 mm - 10 Gew%
Sinterkorund < 0.1 mm - 40 Gew%

Als temporäres Bindemittel wird Sulfitlauge (4 Gew.-%) eingesetzt. Die Polymerpartikel (Mengen: siehe unten) werden zunächst trocken durch Rühren mit der Keramikrohmasse gemischt. Aus der Polymerpartikel enthaltenden Keramikrohmasse werden Prüfkörper mit Kantenlängen von 36 mm gepresst. Dies erfolgt durch uniaxialles Pressen in einer Stahlform unter einem Pressdruck von 100 MPa. Anschließend werden die Prüfkörper 5 Stunden bei 110 °C getrocknet. Nach dem Trocknen wird die Keramik 4 Stunden bei 1500 °C in Luftatmosphäre gebrannt. Die Ergebnisse zeigt Tabelle 8.

**Tabelle 8**

| | **Rohdichte (getrocknet)** | | **Rohdichte (gebrannt)** | | **Kaltdruckfestigkei t** | | **Schwindun 9** |
|---|---|---|---|---|---|---|---|
| | *(g*/*cm³ )* | *relativ* | *(g*/*cm³ )* | *relativ* | *(N*/*mm²)* | *relativ* | *(%)* |
| VB 8 | 2,84 | 100,0 | 2,82 | 100,0 | 24,1 | 100,0 | 0,3 |
| VB 21 | 2,79 | 98,2 | 2,74 | 97,1 | 18,4 | 76,4 | 0,3 |
| VB 22 | 2,62 | 92,0 | 2,49 | 88,2 | 6,8 | 28,1 | 0,4 |
| VB 23 | 2,42 | 85,1 | 2,21 | 78,5 | 2,4 | 10,1 | 0,4 |
| VB 24 | 2,57 | 90,4 | 2,45 | 87,0 | 5,0 | 20,9 | 0,4 |
| VB 25 | 2,60 | 91,3 | 2,47 | 87,7 | 6,3 | 26,2 | 0,4 |

### Ergebnisse

- DEGACRYL-Zusatz in einem gepressten Korundwerkstoff bewirkt eine deutliche Verringerung seiner Rohdichte
- Die M449 und M527-Produkte schneiden im direkten Vergleich besser ab als M546

### Vergleichsbeispiel 26: Gepresster Korundwerkstoff unter Verwendung eines reaktiven Bindemittels mit Vergleichsbeispiel 9

Ziel der Untersuchung war die Prüfung, ob durch Einsatz eines reaktiven Binders der durch das DEGACRYL verursachte Festigkeitsabfall verringert werden könnte. Die Versuche erfolgten an einem gepressten Korundwerkstoff mit Kornaufbau wie in Vergleichsbeispielen 21-25. Als Polymerpartikel diente Degacryl M527. Das Produkt wurde trocken eingeführt und mit anderen Komponenten gemischt. Die Zusatzmenge betrug 2 Gew.-%. Die Herstellung der Prüfkörper (Durchmesser = Höhe = 36 mm) erfolgte durch uniaxiales Pressen in einer Stahlform mit einem Pressdruck von 100 MPa. Als ein reaktives Bindemittel kommt SDX-Gel (4%) zum Einsatz. Die getrockneten (110 °C, 10 h) Prüfkörper werden bei 1500 °C, 4 h in Luftatmosphäre gebrannt. Ergebnisse zeigt Tabelle 9.

Vergleichsbeispiel 9 wurde analog, ohne Zugabe der Polymerpartikel hergestellt.

**Tabelle 9**

| | M527-Anteil (Gew%) | Kaltdruckfestigkeit (N/mm²) | Rohdichte (g/cm³) | Schwindung (%) |
|---|---|---|---|---|
| Vergleichsbeispiel 9 | 0 | 48,4 | 2,92 | 0 |
| Vergleichsbeispiel 26 | 2 | 34,6 | 2,78 | 0 |

### Ergebnisse

- Der 2 Gew%ige Zusatz der Polymerpartikel hat eine Verringerung der Rohdichte von ca. 5 % zufolge.
- Der Festigkeitsabfall der gepressten Korundwerkstoffe gebunden mit SDX-Gel beträgt ca. 23 %. Eine vergleichbare Zusatzmenge von M449 zum Korundwerkstoff mit herkömmlichem Binder ruft eine Festigkeitsminderung um ca. 40 % hervor. Daraus folgt, dass durch Einsatz eines reaktiven Binders die Gefügeschwächung der mit DEGACRYL hergestellten Werkstoffe erheblich verringert werde kann

### Beispiele 27-31 Feinkörniger Korundbeton mit Vergleichsbeispiel 10

Als Versuchswerkstoff diente ein feinkörniger Korundbeton mit folgendem Kornaufbau: Sinterkorund < 0.045 mm - 50 Gew%, calcinierte Tonerde 50 Gew%. Als Porenbildner kam das DEGACRYL-Produkt M527 zum Einsatz. Es wurde trocken eingebracht und mit anderen Komponenten gemischt. Die Zusatzmenge beträgt: 0, 1, 2, 5, 7 und 10 Gew.- %. Die Herstellung der Prüfkörper (Durchmesser = Höhe = 46 mm) erfolgt durch Gießen in eine Kunststoffform. Als Bindemittel kommt ein Calciumaluminat FF-Zement (4%) zum Einsatz. Die abgebundenen und getrockneten (110 °C, 10 h) Prüfkörper wurden bei 1600 °C, 4h in Luftatmosphäre gebrannt. An gebrannten Prüfkörpern erfolgt die Bestimmung folgender Eigenschaften in Abhängigkeit von der M527-Zusatzmenge: Rohdichte (RD), Offene Porosität (OP), Kaltdruckfestigkeit (KDF). Lineare Schwindung (S). Die erzielten Resultate zeigt Tabelle 10.

Die Beispiele 27 bis 31 entsprechen nicht der vorliegenden Erfindung.

**Tabelle 10**

| | Anteil M527 (Gew.%) | 110 °C | 1600 °C | | | |
|---|---|---|---|---|---|---|
| | | RD (g/cm³) | S (%) | KDF (N/mm²) | OP (%) | RD (g/cm3) |
| VB 10 | 0 | 2,63 | 4,9 | 274,4 | 22,7 | 3,05 |
| Beispiel 27 | 1 | 2,59 | 5,4 | 270,9 | 23,7 | 3,01 |
| Beispiel 28 | 2 | 2,57 | 5,0 | 266,8 | 24,4 | 2,96 |
| Beispiel 29 | 5 | 2,50 | 5,3 | 232,4 | 29,0 | 2,77 |
| Beispiel 30 | 7 | 2,42 | 5,4 | 221,7 | 32,4 | 2,65 |
| Beispiel 31 | 10 | 2,37 | 5,2 | 179,1 | 35,6 | 2,53 |

### Ergebnis

- Die Rohdichte der feinkörnigen Korundbetone kann durch M527-Zusatz um bis zu 5 % reduziert werden ohne erhebliche Beeinträchtigung der anderen Werkstoffparameter. Die dafür benötigte Zusatzmenge vom M527 liegt bei ca. 2-3 %.

### Beispiele 32-33 Grobkörniger Korundbeton mit Vergleichsbeispiel 11

Als Versuchswerkstoff diente ein Industrie-Korundbeton. Als Porenbildner kam das DEGACRYL-Produkt M527 zum Einsatz. Es wurde trocken eingebracht und mit anderen Komponenten gemischt. Die Zusatzmenge beträgt: 0, 2, 5 Gew.- %. Die Herstellung der Prüfkörper (Durchmesser = Höhe = 46 mm) erfolgt durch Gießen in eine Kunststoffform. Als Bindemittel kommt ein Calciumaluminat FF-Zement (4%) zum Einsatz. Die abgebundenen und getrockneten (110 °C, 10 h) Prüfkörper wurden bei 1600 °C, 4h in Luftatmosphäre gebrannt. An gebrannten Prüfkörpern erfolgt die Bestimmung folgender Eigenschaften in Abhängigkeit von der M527-Zusatzmenge: Rohdichte (RD), Offene Porosität (OP), Kaltdruckfestigkeit (KDF). Lineare Schwindung (S). Die erzielten Resultate zeigt Tabelle 11.

Die Beispiele 32 und 33 entsprechen nicht der vorliegenden Erfindung.

**Tabelle 11**

| | Anteil M527 (%) | 110 °C | 1600 °C | | | |
|---|---|---|---|---|---|---|
| | | RD (g/cm³) | S (%) | KDF (N/mm²) | OP (%) | RD (g/cm3) |
| Vergleichsbeispiel 11 | 0 | 3,21 | 0,80 | 247,14 | 11,97 | 3,25 |
| Beispiel 32 | 2 | 3,10 | 0,71 | 222,16 | 18,28 | 3,08 |
| Beispiel 33 | 5 | 2,96 | 0,52 | 77,79 | 26,19 | 2,84 |

### Ergebnis

In einem grobkörnigen Industrie-Korundbeton liegt die vertretbare Zusatzmenge von M527 bei 2-3 %. Die daraus resultierende Reduzierung des Gewichtes der Industriebetone beträgt 5-6 %.

### Zeichnungen

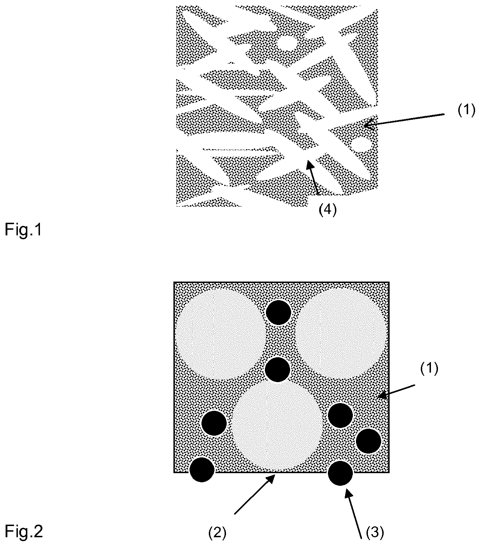

**Fig.1****:** Schematische Darstellung des Werkstoffgefüges einer leichten Feuerfest-Keramik mit Porenbildung nach Stand der Technik mit (1) Matrix der Keramik; (4) nicht erfindungsgemäßer Pore; die optional analog Fig.2 vorhandenen Grobkörner einer gepressten Keramik sind der Übersicht halber nicht abgebildet
**Fig.2****:** Schematische Darstellung des Werkstoffgefüges einer leichten, gepressten Feuerfest-Keramik mit Porenbildung nach erfindungsgemäßen Verfahren mit (1) Matrix der Keramik; (2) Pore; (3) Grobkorn. Eine Gegossene Keramik würde keine Grobkörner aufweisen.

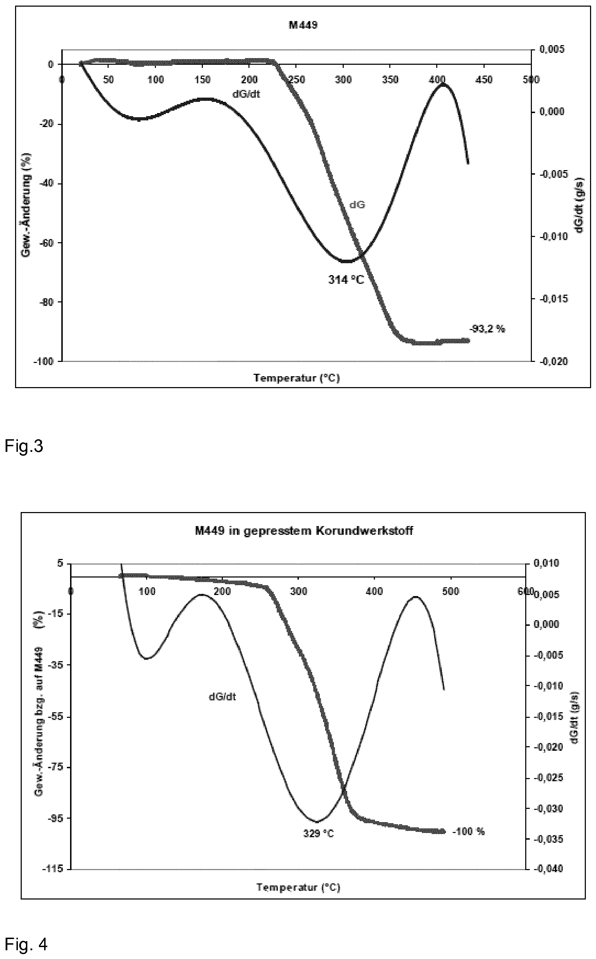

**Fig.3****:** TGA-Untersuchung des Polymerpartikels DEGACRYL M449
**Fig.4****:** TGA-Untersuchung DEGACRYL M449 in einem FF-Korundbeton aus Beispiel 3; Gewicht normiert auf Polymeranteil
**Fig.5****:** TGA-Untersuchung DEGACRYL M449 in einem FF-Korundbeton aus Beispiel 16; Gewicht normiert auf Polymeranteil
**Fig.6****:** Lichtmikroskopische Aufnahme eines Querschnitts der gebrannten Keramik aus Vergleichsbeispiel VB 8
**Fig.7****:** Lichtmikroskopische Aufnahme eines Querschnitts der gebrannten Keramik aus Vergleichsbeispiel 25 (mit 30 Gew% Degacryl M546)
**Fig.8****:** Lichtmikroskopische Aufnahme eines Querschnitts der gebrannten Keramik aus Beispiel 27 (mit 70 Gew% Degacryl M546)

## Patentansprüche

1. Verfahren zur Herstellung von keramischen Werkstoffen, **dadurch gekennzeichnet, dass** zu einer Keramikrohmasse bezogen auf die Summe aus Keramikrohmasse und Polymerpartikeln zwischen 40 und 70 Gew%, sphärischer Polymerpartikel mit einem Durchmesser zwischen 5 µm und 3 mm zugegeben werden, und dass die Keramikrohmasse zu einem keramischen Werkstoff verarbeitet wird, wobei die Keramikrohmasse weniger als 10 Gew% Keramikpartikel, die größer als 0,6 mm sind, enthält, und wobei die Keramikrohmasse in eine Form gegossen, anschließend getrocknet, gegebenenfalls getempert und gebrannt wird.

2. Verfahren gemäß Anspruch 1, **dadurch gekennzeichnet, dass** die sphärischen Polymerpartikel eine monomodale Korngrößenverteilung aufweisen.

3. Verfahren gemäß Anspruch 1 oder 2, **dadurch gekennzeichnet, dass** die sphärischen Polymerpartikel aus einem Polymer mit einer Ceiling-Temperatur kleiner 280 °C zusammengesetzt sind, und dass die Keramikrohmasse bei einer Temperatur, die mindestens 100 °C oberhalb der Ceiling-Temperatur liegt, ausgebrannt wird.

4. Verfahren gemäß mindestens einem der Ansprüche 1 bis 3, **dadurch gekennzeichnet, dass** es sich bei dem Polymer um ein Polymethacrylat, um Polyoxymethylen oder um Poly-α-methylstyrol handelt, und dass die Partikel einen Durchmesser zwischen 10 µm und 200 µm aufweisen.

5. Verfahren gemäß Anspruch 46, **dadurch gekennzeichnet, dass** das Polymethacrylat einen Sauerstoffanteil von mindestens 25 Gew% aufweist.

6. Verfahren gemäß Anspruch 5, **dadurch gekennzeichnet, dass** es sich bei dem Polymer um ein Polymethacrylat mit einem Methylmethacrylat-Anteil von mindestens 80 Gew% handelt.

7. Verfahren gemäß mindestens einem der Ansprüche 1 bis 6, **dadurch gekennzeichnet, dass** es sich bei den Polymerpartikeln um thermoplastische Suspensionspolymerisate handelt.

8. Verfahren gemäß mindestens einem der Ansprüche 1 bis 7, **dadurch gekennzeichnet, dass** die Polymerpartikel eine Korngrößenverteilung zwischen 0,5 und 2,0 aufweisen.

9. Verfahren gemäß mindestens einem der Ansprüche 1 bis 7, **dadurch gekennzeichnet, dass** die Polymerpartikel verteilt in einer Flüssigkeit, bevorzugt in Wasser, Kunstharz oder Alkohol, in Form einer Suspension der Keramikmasse zugemischt werden.

10. Feuerfester keramischer Werkstoff, **dadurch gekennzeichnet, dass** es sich beim dem Keramikwerkstoff um nach einem Verfahren gemäß Anspruch 1 gegossene Betone, die einen Porenanteil zwischen 40 und 70 Vol% aufweisen, wobei die Poren mit einen Durchmesser zwischen 4 µm und 3,5 mm isoliert und sphärisch sind, handelt.

11. Werkstoff gemäß Anspruch 10, **dadurch gekennzeichnet, dass** die Poren einen Durchmesser zwischen 5 µm und 200 µm aufweisen.

12. Werkstoff gemäß Anspruch 11, **dadurch gekennzeichnet, dass** der ausgebrannte Werkstoff einen Russanteil kleiner 0,05 Gew% aufweist.

13. Verwendung eines Werkstoffes gemäß mindestens einem der Ansprüche 10 bis 12 als wärmedämmendes Material, als Arbeitsfutter oder Innenisolierung in Hochöfen oder Reaktoren, im Reaktorbau, als Trägermaterial für Katalysatoren, zur Konstruktion von Tunnelofenwagen, als Dachziegel, als Wandfliesen, als Geschirrkeramik oder zur Schmuckherstellung.

## Claims

1. Process for producing ceramic materials, **characterized in that** a ceramic raw composition is admixed with between 40% and 70% by weight of spherical polymer particles having a diameter of between 5 µm and 3 mm, based on the sum of ceramic raw composition and polymer particles, and **in that** the ceramic raw composition is processed to give a ceramic material, wherein the ceramic raw composition contains less than 10% by weight of ceramic particles which are larger than 0.6 mm and wherein the ceramic raw composition is cast into a mould, subsequently dried, optionally heat-treated and fired.

2. Process according to Claim 1, **characterized in that** the spherical polymer particles have a monomodal particle size distribution.

3. Process according to Claim 1 or 2, **characterized in that** the spherical polymer particles are composed of a polymer having a ceiling temperature of less than 280°C, and **in that** the ceramic raw composition is subjected to burning out at a temperature which is at least 100°C above the ceiling temperature.

4. Process according to at least one of Claims 1 to 3, **characterized in that** the polymer is a polymethacrylate, polyoxymethylene or poly-α-methylstyrene, and **in that** the particles have a diameter of between 10 µm and 200 µm.

5. Process according to Claim 4, **characterized in that** the polymethacrylate has an oxygen content of at least 25% by weight.

6. Process according to Claim 5, **characterized in that** the polymer is a polymethacrylate having a methyl methacrylate content of at least 80% by weight.

7. Process according to at least one of Claims 1 to 6, **characterized in that** the polymer particles are thermoplastic suspension polymers.

8. Process according to at least one of Claims 1 to 7, **characterized in that** the polymer particles have a particle size distribution of between 0.5 and 2.0.

9. Process according to at least one of Claims 1 to 7, **characterized in that** the polymer particles are added in the form of a suspension dispersed in a liquid, preferably in water, synthetic resin or alcohol, to the ceramic composition.

10. Refractory ceramic material, **characterized in that** the ceramic material is concretes cast by a process according to Claim 1 and having a proportion of pores of between 40% and 70% by volume, wherein the pores having a diameter of between 4 µm and 3.5 mm are isolated and spherical.

11. Material according to Claim 10, **characterized in that** the pores have a diameter of between 5 µm and 200 µm.

12. Material according to Claim 11, **characterized in that** the burnt out material has a proportion of soot of less than 0.05% by weight.

13. Use of a material according to at least one of Claims 10 to 12 as thermal insulation material, as working lining or interior insulation in blast furnaces or reactors, in reactor construction, as support material for catalysts, for the construction of tunnel kiln cars, as roofing tile, as wall tiles, as kitchen ceramic or for the production of jewellery.

## Revendications

1. Procédé pour la préparation de matériaux de céramique, **caractérisé en ce qu'**entre 40 et 70 % en poids de particules de polymère sphériques, par rapport à la somme de la masse brute de céramique et des particules de polymère, dotées d'un diamètre compris entre 5 µm et 3 mm sont ajoutées à une masse brute de céramique et **en ce que** la masse brute de céramique est traitée pour donner un matériau de céramique, la masse brute de céramique contenant moins de 10 % en poids de particules de céramique qui sont supérieures à 0,6 mm, et la masse brute de céramique étant coulée dans un moule, par la suite séchée, éventuellement recuite et brûlée.

2. Procédé selon la revendication 1, **caractérisé en ce que** les particules de polymère sphériques présentent une granulométrie monomodale.

3. Procédé selon la revendication 1 ou 2, **caractérisé en ce que** les particules de polymère sphériques sont composées d'un polymère doté d'une température plafond inférieure à 280 °C, et **en ce que** la masse brute de céramique est brûlée à une température qui est au moins 100 °C supérieure à la température plafond.

4. Procédé selon l'une quelconque des revendications 1 à 3, **caractérisé en ce que** le polymère est un polyméthacrylate, un polyoxyméthylène ou un poly-α-méthylstyrène, et **en ce que** les particules présentent un diamètre compris entre 10 µm et 200 µm.

5. Procédé selon la revendication 4, **caractérisé en ce que** le polyméthacrylate présente une proportion d'oxygène d'au moins 25 % en poids.

6. Procédé selon la revendication 5, **caractérisé en ce que** le polymère est un polyméthacrylate doté d'une proportion de méthacrylate de méthyle d'au moins 80 % en poids.

7. Procédé selon au moins l'une des revendications 1 à 6, **caractérisé en ce que** les particules de polymère sont des polymérisats en suspension thermoplastiques.

8. Procédé selon au moins l'une des revendications 1 à 7, **caractérisé en ce que** les particules de polymère présentent une granulométrie comprise entre 0,5 et 2,0.

9. Procédé selon au moins l'une des revendications 1 à 7, **caractérisé en ce que** les particules de polymère, dispersées dans un liquide, préférablement dans de l'eau, une résine synthétique ou un alcool, sous forme d'une suspension, sont ajoutées à la masse de céramique.

10. Matériau de céramique ignifuge, **caractérisé en ce que** le matériau de céramique est un béton coulé par un procédé selon la revendication 1 qui présente une proportion de pores comprise entre 40 et 70 % en volume, les pores dotés d'un diamètre compris entre 4 µm et 3,5 mm étant isolés et étant sphériques.

11. Matériau selon la revendication 10, **caractérisé en ce que** les pores présentent un diamètre compris entre 5 µm et 200 µm.

12. Matériau selon la revendication 11, **caractérisé en ce que** le matériau brûlé présente une proportion de suie inférieure à 0,05 % en poids.

13. Utilisation d'un matériau selon au moins l'une des revendications 10 à 12 en tant que matériau thermoisolant, en tant que doublure de travail ou isolation intérieure dans des haut-fourneaux ou des réacteurs, dans la construction de réacteurs, en tant que matériau de support pour des catalyseurs, pour la construction de chariots de four à tunnel, en tant que tuiles de toit, en tant que carreaux muraux, en tant que céramique pour vaisselle ou pour la préparation de bijoux.
